# EUROPEAN PATENT APPLICATION

(11) **EP 4 838 792 A1**
(43) Date of publication of application: **11.11.2026**
(21) Application number: 24914689.5
(22) Date of filing: 05.01.2024
(51) Int. Cl.: H04B 7/0456

(54) **COMMUNICATION METHOD, TERMINAL, NETWORK DEVICE, COMMUNICATION SYSTEM, AND STORAGE MEDIUM**

(71) Applicant: Beijing Xiaomi Mobile Software Co., Ltd., Beijing 100085 (CN)
(72) Inventor: ZHANG, Zhenyu, Beijing 100085 (CN)
(74) Representative: Dehns Germany Partnerschaft mbB
(86) International application number: PCT/CN2024/070975
(87) International publication number: WO 2025/145460

(57) **Abstract**

A communication method, a terminal, a network device, a communication system, and a storage medium. The method comprises: a terminal determines a first codeword in a first codebook, the first codebook being constructed on the basis of angle parameters and distance parameters, the first codebook being a codebook used when the terminal is in a near-field region of a first antenna array, and the first antenna array being an antenna array used by a network device to transmit a wireless signal to the terminal; and the terminal sends first information to the network device, the first information being used for indicating the angle parameter and distance parameter corresponding to the first codeword. The first codebook for the near-field region can be constructed on the basis of the angle parameters and the distance parameters, so that the first codeword determined by the terminal can better match wireless propagation characteristics of the near-field region, thereby improving the transmission performance of the near-field region.

## Description

### TECHNICAL FIELD

This disclosure relates to the field of communication technology, and more particularly to a communication method, a terminal, a network device, a communication system, and a storage medium.

### BACKGROUND

Multiple-Input Multiple-Output (MIMO) technology effectively improves system capacity and throughput by introducing multiple antennas. On the one hand, continuously increasing the number of antennas will further improve system performance; on the other hand, the introduction of higher frequency bands will lead to greater path loss, while a larger number of antennas can provide greater beamforming gain.

### SUMMARY

The embodiments of this disclosure provide a communication method, a terminal, a network device, a communication system, and a storage medium.

According to a first aspect of embodiments of the present disclosure, a communication method is provided, the method including:
determining, by a terminal, a first codeword in a first codebook, wherein the first codebook is constructed based on an angle parameter and a distance parameter, the first codebook is a codebook used by the terminal in a near-field region of a first antenna array, the first antenna array is an antenna array of a network device for transmitting wireless signals to the terminal;
sending, by the terminal, first information to the network device, wherein the first information indicates the angle parameter and the distance parameter corresponding to the first codeword.

According to a second aspect of embodiments of the present disclosure, a communication method is provided, the method including:
receiving, by a network device, first information sent by a terminal, wherein the first information indicates an angle parameter and a distance parameter corresponding to the first codeword, the first codeword is a codeword in the first codebook, the first codebook is constructed based on an angle parameter and a distance parameter, the first codebook is a codebook used by the terminal in a near-field region of a first antenna array, the first antenna array is an antenna array of the network device for transmitting wireless signals to the terminal.

According to a third aspect of embodiments of the present disclosure, a terminal is provided, the terminal including:
a processing module, configured to determine a first codeword in a first codebook, wherein the first codebook is constructed based on an angle parameter and a distance parameter, the first codebook is a codebook used by the terminal in a near-field region of a first antenna array, the first antenna array is an antenna array of a network device for transmitting wireless signals to the terminal;
a transceiver module, configured to send first information to the network device, wherein the first information indicates the angle parameter and the distance parameter corresponding to the first codeword.

According to a fourth aspect of embodiments of the present disclosure, a network device is provided, the network device including:
a transceiver module, configured to receive first information sent by a terminal, wherein the first information indicates an angle parameter and a distance parameter corresponding to the first codeword, the first codeword is a codeword in the first codebook, the first codebook is constructed based on an angle parameter and a distance parameter, the first codebook is a codebook used by the terminal in a near-field region of a first antenna array, the first antenna array is an antenna array of the network device for transmitting wireless signals to the terminal.

According to a fifth aspect of embodiments of the present disclosure, a terminal is provided, including:
one or more processors;
a memory coupled to the one or more processors, wherein the memory includes executable instructions, which, when executed by the one or more processors, cause the terminal to perform the communication method described in the first aspect.

According to a sixth aspect of embodiments of the present disclosure, a network device is provided, including:
one or more processors;
a memory coupled to the one or more processors, wherein the memory includes executable instructions, which, when executed by the one or more processors, cause the network device to perform the communication method described in the second aspect.

According to a seventh aspect of embodiments of the present disclosure, a communication system is provided, including a communication system, including a terminal and a network device, wherein the terminal is configured to implement the communication method described in the first aspect, and the network device is configured to implement the communication method described in the second aspect.

According to an eighth aspect of embodiments of the present disclosure, a storage medium is provided, the storage medium storing instructions that, when executed on a communication device, cause the communication device to perform the communication method as described in the first or second aspect.

In the above embodiments, a first codebook for the near-field region can be constructed based on angle parameters and distance parameters, enabling the first codeword determined by the terminal to better match the wireless propagation characteristics of the near-field region, thereby improving the transmission performance of the near-field region.

### BRIEF DESCRIPTION OF THE DRAWINGS

To more clearly illustrate the technical solutions in the embodiments of this disclosure, the drawings required to describe the embodiments are introduced in the following. The following drawings are merely some embodiments of this disclosure and do not impose specific limitations on the scope of protection of this disclosure.
FIG. 1A is an example schematic diagram of the architecture of a communication system provided according to an embodiment of the present disclosure.
FIG. 1B is an example schematic diagram of a first antenna array according to an embodiment of the present disclosure.
FIG. 1C is an example schematic diagram of a first antenna array according to an embodiment of the present disclosure.
FIG. 2 is an example interaction diagram of a communication method according to an embodiment of the present disclosure.
FIG. 3A is an example flowchart diagram of a communication method according to an embodiment of the present disclosure.
FIG. 3B is an example flowchart diagram of a communication method provided according to an embodiment of the present disclosure.
FIG. 4A is an example flowchart diagram of a communication method according to an embodiment of the present disclosure.
FIG. 4B is an example flowchart diagram of a communication method according to an embodiment of the present disclosure.
FIG. 5 is an example interaction diagram of a communication method according to an embodiment of the present disclosure.
FIG. 6 is an example flowchart diagram of a communication method according to an embodiment of the present disclosure.
FIG. 7A is an example structural diagram of a terminal provided according to an embodiment of the present disclosure.
FIG. 7B is an example structural diagram of a network device according to an embodiment of the present disclosure.
FIG. 8A is an example structural diagram of a communication device according to an embodiment of the present disclosure.
FIG. 8B is an example structural diagram of a communication device according to an embodiment of the present disclosure.

### DETAILED DESCRIPTION

The embodiments of this disclosure provide a communication method, a terminal, a network device, a communication system, and a storage medium.

In a first aspect, the embodiments of this disclosure provide a communication method, including:
determining, by a terminal, a first codeword in a first codebook, wherein the first codebook is constructed based on an angle parameter and a distance parameter, the first codebook is a codebook used by the terminal in a near-field region of a first antenna array, the first antenna array is an antenna array of the network device for transmitting wireless signals to the terminal;
sending, by the terminal, first information to the network device, wherein the first information indicates the angle parameter and the distance parameter corresponding to the first codeword.

In the above embodiments, a first codebook for the near-field region can be constructed based on angle parameters and distance parameters, thereby enabling the terminal to determine the corresponding first codeword in the near-field region, and feeding back the angle parameters and distance parameters corresponding to the first codeword to the network device through the first information, this allows the first codeword determined by the terminal to better match the wireless propagation characteristics of the near-field region, thereby improving the transmission performance of the near-field region.

In conjunction with some embodiments of the first aspect, in some embodiments, the first antenna array is any one of the following: a uniform linear array; a uniform planar array.

In the above embodiments, the first codebook can be applied to antenna arrays of the uniform linear array or the uniform planar array, thereby enabling terminals located in such antenna arrays to achieve more reliable near-field region transmission based on the first codebook.

In conjunction with some embodiments of the first aspect, in some embodiments, the number of antenna ports of the first antenna array in a horizontal dimension is *N*₁, and the number of antenna ports of the first antenna array in a vertical dimension is *N*₂, wherein *N*₁ is greater than or equal to 1, and *N*₂ is greater than or equal to 1.

In the above embodiments, the first codebook can be applied to antenna arrays including those with more than or equal to 1 antenna port in both the horizontal and vertical dimensions, thereby enabling terminals located in such antenna arrays to achieve more reliable near-field region transmission based on the first codebook.

In conjunction with some embodiments of the first aspect, in some embodiments, the angle parameter includes at least one of the following: a first angle domain parameter of the near-field region in the horizontal dimension; a second angle domain parameter of the near-field region in the vertical dimension.

In the above embodiments, the first codebook can be constructed based on the angle parameters in the horizontal and vertical dimensions respectively, enabling the first antenna array to achieve better near-field transmission performance in both the horizontal and vertical dimensions.

In conjunction with some embodiments of the first aspect, a basis vector of the first codebook is the Kronecker product of a first basis vector in the horizontal dimension and a second basis vector in the vertical dimension; the ${n}_{1}^{′}$-th element ${ν}_{{n}_{1}^{′}}$ of the first basis vector v is: ${ν}_{{n}_{1}^{′}} = exp \left(j\frac{2 π}{λ}\left({n}_{1}{d}_{x} cosθsinφ-\frac{{n}_{1}^{2} {d}_{x}^{2} \left(1-{cos}^{2} {θsin}^{2} φ\right)}{2 r}\right)\right)$;
the ${n}_{2}^{′}$ -th element ${u}_{{n}_{2}^{′}}$ of the second basis vector *u* is: ${u}_{{n}_{2}^{′}} = exp \left(j\frac{2 π}{λ}\left({n}_{2}{d}_{z} cos φ-\frac{{n}_{2}^{2} {d}_{z}^{2} {sin}^{2} φ}{2 r}\right)\right)$;
where, *n*₁ denotes an antenna port index in the horizontal dimension, *n*₂ denotes an antenna port index in the vertical dimension, ${n}_{1}^{′} = {n}_{1} + \left({N}_{1}+1\right) / 2$ , ${n}_{2}^{′} = {n}_{2} + \left({N}_{2}+1\right) / 2$; cos *θ* sin *φ* denotes a first angle domain parameter corresponding to the codeword in the first codebook, cos *φ* denotes a second angle domain parameter corresponding to the codeword in the first codebook, and *r* denotes the distance parameter corresponding to the codeword in the first codebook, -1≤cos*φ*≤1 , -1≤cos*θ*≤1, the distance parameter corresponding to the codeword in the first codebook satisfies at least one of the following: $0 < r \leq \frac{2 {D}_{x}^{2} {sin}^{2} θ}{λ} , 0 < r \leq \frac{2 {D}_{x}^{2} {sin}^{2} α}{λ}$ and $0 < r \leq \frac{2 {D}_{z}^{2} {sin}^{2} φ}{λ}$, where cos *α* = -cos *θ* sin *φ* ; *j* is an imaginary unit, *λ* denotes a wavelength of the wireless signal, *dₓ* denotes an antenna spacing of the first antenna array in the horizontal dimension, *Dₓ* denotes a length of the first antenna array in the horizontal dimension, *d_{z}* denotes an antenna spacing of the first antenna array in the vertical dimension, and *D_{z}* denotes a length of the first antenna array in the vertical dimension.

In this embodiment of the disclosure, based on the aforementioned formula and the angle and distance parameters in the horizontal dimension and the angle and distance parameters in the vertical dimension, the codewords corresponding to each angle parameter and each distance parameter in the first codebook can be accurately determined, thereby constructing a corresponding first codebook. This results in a larger antenna radiation pattern gain, ensuring near-field transmission performance.

In conjunction with some embodiments of the first aspect, in some embodiments, the first information includes at least one of the following: first indication information, indicating a first angle domain parameter corresponding to the first codeword; second indication information, indicating a second angle domain parameter corresponding to the first codeword; third indication information, indicating the distance parameter corresponding to the first codeword.

In this embodiment of the disclosure, the terminal can achieve feedback of a first codeword based on first information, enabling the network device to obtain the first codeword determined by the terminal based on the first information, thus ensuring that the first antenna array can perform near-field transmission based on the first codeword.

In conjunction with some embodiments of the first aspect, in some embodiments, the angle parameter includes *N*₁*O*₁ angle sampling points obtained by quantizing a first angle domain parameter of the near-field region in the horizontal dimension, and/or *N*₂*O*₂ angle sampling points obtained by quantizing a second angle domain parameter of the near-field region in the vertical dimension;
the distance parameter includes *N*₃*O*₃ distance sampling points obtained by quantizing a first distance domain parameter of the near-field region in the horizontal dimension, and/or *N*₄*O*₄ distance sampling points obtained by quantizing a second distance domain parameter of the near-field region in the vertical dimension;
where, *N*₃ denotes the number of sampling points for the distance parameter in the horizontal dimension, *N*₄ denotes the number of sampling points for the distance parameter in the vertical dimension, *O*₁ denotes an oversampling factor of the angle parameter in the horizontal dimension, *O*₂ denotes an oversampling factor of the angle parameter in the vertical dimension, *O*₃ denotes an oversampling factor of the distance parameter in the horizontal dimension, and *O*₄ denotes an oversampling factor of the distance parameter in the vertical dimension.

In this embodiment, the angle and distance parameters can be quantized in the horizontal and vertical dimensions, respectively, and a first codebook can be constructed based on the quantized sampling points. This quantizes continuous angle and distance parameters into discrete sampling points, effectively reducing the number of codewords in the first codebook, and reducing the resource overhead and power consumption of the terminal in determining the first codeword.

In conjunction with some embodiments of the first aspect, in some embodiments, a basis vector of the first codebook is the Kronecker product of a first basis vector in the horizontal dimension and a second basis vector in the vertical dimension; the ${n}_{1}^{′}$ -th element ${ν}_{{n}_{1}^{′}}$ of the first basis vector *v* is:
${ν}_{{n}_{1}^{′}} = exp \left(j\frac{2 π}{λ}\left(\frac{2 {ln}_{1} {d}_{x}}{{N}_{1} {O}_{1}}-\frac{{n}_{1}^{2} {d}_{x}^{2} {λN}_{3}^{2} {O}_{3}^{2}}{4 {o}_{1}^{2} {D}_{x}^{2}}\right)\right) ;$
the ${n}_{2}^{′}$-th element ${u}_{{n}_{2}^{′}}$ of the second basis vector *u* is:
   ${u}_{{n}_{2}^{′}} = exp \left(j\frac{2 π}{λ}\left(\frac{2 {mn}_{2} {d}_{z}}{{N}_{2} {O}_{2}}-\frac{{n}_{2}^{2} {d}_{z}^{2} {λN}_{4}^{2} {O}_{4}^{2}}{4 {o}_{2}^{2} {D}_{z}^{2}}\right)\right) ;$
where, *n*₁ denotes an antenna port index in the horizontal dimension, *n*₂ denotes an antenna port index in the vertical dimension, ${n}_{1}^{′} = {n}_{1} + \left({N}_{1}+1\right) / 2$ , ${n}_{2}^{′} = {n}_{2} + \left({N}_{2}+1\right) / 2$ ;
*l* denotes an angle sampling point index in the horizontal dimension corresponding to the codeword in the first codebook, *m* denotes an angle sampling point index in the vertical dimension corresponding to the codeword in the first codebook, *o*₁ denotes a distance sampling point index in the horizontal dimension corresponding to the codeword in the first codebook, *o*₂ denotes a distance sampling point index in the vertical dimension corresponding to the codeword in the first codebook, *l =* 0,1,···,*N*₁*O*₁ -1 , *m =* 0,1,···,*N*₂*O*₂ *-*1, *o*₁ *=*1,2,···,*N*₃*O*₃, *o*₂ *=* 1,2,···,*N*₄*O*₄;
*j* is an imaginary unit, *λ* denotes a wavelength of the wireless signal, *dₓ* denotes an antenna spacing of the first antenna array in the horizontal dimension, *Dₓ* denotes a length of the first antenna array in the horizontal dimension, *d_{z}* denotes an antenna spacing of the first antenna array in the vertical dimension, and *D_{z}* denotes a length of the first antenna array in the vertical dimension.

In this embodiment of the disclosure, based on the above formula and the possible values of each sampling point, the codewords corresponding to each angle sampling point and each distance sampling point can be determined, thereby constructing a corresponding first codebook.

In conjunction with some embodiments of the first aspect, in some embodiments, the antenna port index of the first antenna array satisfies the following condition: *n*₁ ∈ {-(*N*₁ -1)/2,···,0,···(*N*₁ -1)/2}; *n*₂ ∈{-(*N*₂ *-*1)/2,*···*,0,···(*N*₂ -1)/2}.

In conjunction with some embodiments of the first aspect, in some embodiments, an initial phase of the basis vector is zero;
the ${n}_{1}^{′}$ -th element ${ν}_{{n}_{1}^{′}}$ of the first basis vector *v* is: ${ν}_{{n}_{1}^{′}} = exp \left(j\frac{2 π}{λ}\left(\frac{2 {ln}_{1}^{′} {d}_{x}}{{N}_{1} {O}_{1}}-\frac{\left({\left({n}_{1}^{′}\right)}^{2}-{n}_{1}^{′}\left({N}_{1}+1\right)\right) {d}_{x}^{2} {λN}_{3}^{2} {O}_{3}^{2}}{4 {o}_{1}^{2} {D}_{x}^{2}}\right)\right)$; the ${n}_{2}^{′}$-th element ${u}_{{n}_{2}^{′}}$ of the second basis vector *u* is: ${u}_{{n}_{2}^{′}} = exp \left(j\frac{2 π}{λ}\left(\frac{2 {mn}_{2}^{′} {d}_{z}}{{N}_{2} {O}_{2}}-\frac{\left({\left({n}_{2}^{′}\right)}^{2}-{n}_{2}^{′}\left({N}_{2}+1\right)\right) {d}_{z}^{2} {λN}_{4}^{2} {O}_{4}^{2}}{4 {o}_{2}^{2} {D}_{z}^{2}}\right)\right)$.

In the above embodiments, terms unrelated to ${n}_{1}^{′}$ can be removed from the formula, effectively reducing the complexity of determination of the codebook.

In conjunction with some embodiments of the first aspect, in some embodiments, the antenna spacing in both the horizontal and vertical dimensions of the first antenna array is $\frac{λ}{2} , {D}_{x} = {N}_{1} \frac{λ}{2}$, and ${D}_{y} = {N}_{1} \frac{λ}{2}$;
the ${n}_{1}^{′}$-th element ${ν}_{{n}_{1}^{′}}$ of the first basis vector v is:
   ${ν}_{{n}_{1}^{′}} = exp \left(\frac{j 2 {πln}_{1}^{′}}{{N}_{1} {O}_{1}}-\frac{jπ \left({\left({n}_{1}^{′}\right)}^{2}-{n}_{1}^{′}\left({N}_{1}+1\right)\right) {N}_{3}^{2} {O}_{3}^{2}}{2 {o}_{1}^{2} {N}_{1}^{2}}\right) ;$
the ${n}_{2}^{′}$-th element ${u}_{{n}_{2}^{′}}$ of the second basis vector *u* is:
   ${u}_{{n}_{2}^{′}} = exp \left(\frac{j 2 {πmn}_{2}^{′}}{{N}_{2} {O}_{2}}-\frac{jπ \left({\left({n}_{2}^{′}\right)}^{2}-{n}_{2}^{′}\left({N}_{2}+1\right)\right) {N}_{4}^{2} {O}_{4}^{2}}{2 {o}_{2}^{2} {N}_{2}^{2}}\right) .$

In conjunction with some embodiments of the first aspect, in some embodiments, the first information includes at least one of the following: a first indication field, indicating the angle sampling point index of the first codeword in the horizontal dimension; a second indication field, indicating the angle sampling point index of the first codeword in the vertical dimension; a third indication field, indicating the distance sampling point index of the first codeword in the horizontal dimension; a fourth indication field, indicating the distance sampling point index of the first codeword in the vertical dimension.

In the above embodiments, the terminal can accurately report the angle and distance sampling points in the horizontal and/or vertical dimensions corresponding to the first codeword through the first information. This allows the network device to accurately obtain the first codeword determined by the terminal based on the first information and perform near-field transmission based on the first codeword, effectively improving the reliability of near-field transmission.

In conjunction with some embodiments of the first aspect, in some embodiments, the first indication field at least includes $\left⌈{log}_{2} {N}_{1}{O}_{1}\right⌉$ bits; the second indication field at least includes $\left⌈{log}_{2} {N}_{2}{O}_{2}\right⌉$ bits; the third indication field at least includes $\left⌈{log}_{2} {N}_{3}{O}_{3}\right⌉$ bits; the fourth indication field at least includes $\left⌈{log}_{2} {N}_{4}{O}_{4}\right⌉$ bits.

In the above embodiments, the minimum indication field can be used to indicate each parameter, effectively reducing the resource overhead of the first codeword feedback.

In conjunction with some embodiments of the first aspect, in some embodiments, the first codebook is used for single-polarization single-layer transmission; or, the first codebook is used for dual-polarization multi-layer transmission, wherein the first codebook is constructed based on the angle parameter, the distance parameter, and a co-phase coefficient.

In the above embodiments, the first codebook can be used for single-polarization single-layer transmission or dual-polarization multi-layer transmission. If dual-polarization multi-layer transmission is considered, a co-phase coefficient between polarization directions can be introduced.

In conjunction with some embodiments of the first aspect, in some embodiments, the method further includes:
sending, by the terminal, second information to the network device, wherein the second information indicates the co-phase coefficient corresponding to the first codeword.

In the above embodiments, the terminal can indicate the co-phase coefficient by sending second information, thereby enabling the network device to more accurately determine the first codeword based on the first and second information, thus further ensuring communication quality.

In conjunction with some embodiments of the first aspect, in some embodiments, the co-phase coefficient includes at least one of: Binary Phase Shift Keying (BPSK), Quadruple Phase Shift Keying (QPSK), and Eight-Phase Phase Shift Keying (8-PSK).

In a second aspect, embodiments of this disclosure provide a communication method, the method including:
receiving, by a network device, first information sent by a terminal, wherein the first information indicates an angle parameter and a distance parameter corresponding to the first codeword, the first codeword is a codeword in the first codebook, the first codebook is constructed based on an angle parameter and a distance parameter, the first codebook is a codebook used by the terminal in a near-field region of a first antenna array, the first antenna array is an antenna array of the network device for transmitting wireless signals to the terminal.

In conjunction with some embodiments of the second aspect, in some embodiments, the first antenna array is any one of the following: a uniform linear array; a uniform planar array.

In conjunction with some embodiments of the first aspect, in some embodiments, the number of antenna ports of the first antenna array in a horizontal dimension is *N*₁, and the number of antenna ports of the first antenna array in a vertical dimension is *N*₂, wherein *N*₁ is greater than or equal to 1, and *N*₂ is greater than or equal to 1.

In conjunction with some embodiments of the first aspect, in some embodiments, the angle parameter includes at least one of the following: a first angle domain parameter of the near-field region in the horizontal dimension; a second angle domain parameter of the near-field region in the vertical dimension.

In conjunction with some embodiments of the first aspect, in some embodiments, a basis vector of the first codebook is the Kronecker product of a first basis vector in the horizontal dimension and a second basis vector in the vertical dimension; the ${n}_{1}^{′}$ -th element ${ν}_{{n}_{1}^{′}}$ of the first basis vector *v* is: ${ν}_{{n}_{1}^{′}} = exp \left(j\frac{2 π}{λ}\left({n}_{1}{d}_{x} cosθsinφ-\frac{{n}_{1}^{2} {d}_{x}^{2} \left(1-{cos}^{2} {θsin}^{2} φ\right)}{2 r}\right)\right)$; the ${n}_{2}^{′}$-th element ${u}_{{n}_{2}^{′}}$ of the second basis vector *u* is: ${u}_{{n}_{2}^{′}} = exp \left(j\frac{2 π}{λ}\left({n}_{2}{d}_{z} cos φ-\frac{{n}_{2}^{2} {d}_{z}^{2} {sin}^{2} φ}{2 r}\right)\right)$; where, *n*₁ denotes an antenna port index in the horizontal dimension, *n*₂ denotes an antenna port index in the vertical dimension, ${n}_{1}^{′} = {n}_{1} + \left({N}_{1}+1\right) / 2 , {n}_{2}^{′} = {n}_{2} + \left({N}_{2}+1\right) / 2$; cos *θ* sin *φ* denotes a first angle domain parameter corresponding to the codeword in the first codebook, cos*φ* denotes a second angle domain parameter corresponding to the codeword in the first codebook, and *r* denotes the distance parameter corresponding to the codeword in the first codebook, -1 ≤ cos *φ* ≤1, -1≤ cos*θ*≤1, the distance parameter corresponding to the codeword in the first codebook satisfies at least one of the following: $0 < r \leq \frac{2 {D}_{x}^{2} {sin}^{2} θ}{λ} , 0 < r \leq \frac{2 {D}_{x}^{2} {sin}^{2} α}{λ}$ and $0 < r \leq \frac{2 {D}_{z}^{2} {sin}^{2} φ}{λ}$, where cos*α*=-cos*θ*sin*φ* ; *j* is an imaginary unit, *λ* denotes a wavelength of the wireless signal, *dₓ* denotes an antenna spacing of the first antenna array in the horizontal dimension, *Dₓ* denotes a length of the first antenna array in the horizontal dimension, *d_{z}* denotes an antenna spacing of the first antenna array in the vertical dimension, and *D_{z}* denotes a length of the first antenna array in the vertical dimension.

In conjunction with some embodiments of the second aspect, in some embodiments, the first information includes at least one of the following: first indication information, indicating a first angle domain parameter corresponding to the first codeword; second indication information, indicating a second angle domain parameter corresponding to the first codeword; third indication information, indicating the distance parameter corresponding to the first codeword.

In conjunction with some embodiments of the second aspect, in some embodiments, the angle parameter includes *N*₁*O*₁ angle sampling points obtained by quantizing a first angle domain parameter of the near-field region in the horizontal dimension, and/or *N*₂*O*₂ angle sampling points obtained by quantizing a second angle domain parameter of the near-field region in the vertical dimension;
the distance parameter includes *N*₃*O*₃ distance sampling points obtained by quantizing a first distance domain parameter of the near-field region in the horizontal dimension, and/or *N*₄*O*₄ distance sampling points obtained by quantizing a second distance domain parameter of the near-field region in the vertical dimension;
where, *N*₃ denotes the number of sampling points for the distance parameter in the horizontal dimension, *N*₄ denotes the number of sampling points for the distance parameter in the vertical dimension, *O*₁ denotes an oversampling factor of the angle parameter in the horizontal dimension, *O*₂ denotes an oversampling factor of the angle parameter in the vertical dimension, *O*₃ denotes an oversampling factor of the distance parameter in the horizontal dimension, and *O*₄ denotes an oversampling factor of the distance parameter in the vertical dimension.

In conjunction with some embodiments of the second aspect, in some embodiments, a basis vector of the first codebook is the Kronecker product of a first basis vector in the horizontal dimension and a second basis vector in the vertical dimension; the ${n}_{1}^{′}$ -th element ${ν}_{{n}_{1}^{′}}$ of the first basis vector *v* is: ${ν}_{{n}_{1}^{′}} = exp \left(j\frac{2 π}{λ}\left(\frac{2 {ln}_{1} {d}_{x}}{{N}_{1} {O}_{1}}-\frac{{n}_{1}^{2} {d}_{x}^{2} {λN}_{3}^{2} {O}_{3}^{2}}{4 {o}_{1}^{2} {D}_{x}^{2}}\right)\right)$; the ${n}_{2}^{′}$ -th element ${u}_{{n}_{2}^{′}}$ of the second basis vector *u* is: ${u}_{{n}_{2}^{′}} = exp \left(j\frac{2 π}{λ}\left(\frac{2 {mn}_{2} {d}_{z}}{{N}_{2} {O}_{2}}-\frac{{n}_{2}^{2} {d}_{z}^{2} {λN}_{4}^{2} {O}_{4}^{2}}{4 {o}_{2}^{2} {D}_{z}^{2}}\right)\right)$; where, *n*₁ denotes an antenna port index in the horizontal dimension, *n*₂ denotes an antenna port index in the vertical dimension, ${n}_{1}^{′} = {n}_{1} + \left({N}_{1}+1\right) / 2 , {n}_{2}^{′} = {n}_{2} + \left({N}_{2}+1\right) / 2$; *l* denotes an angle sampling point index in the horizontal dimension corresponding to the codeword in the first codebook, *m* denotes an angle sampling point index in the vertical dimension corresponding to the codeword in the first codebook, *o*₁ denotes a distance sampling point index in the horizontal dimension corresponding to the codeword in the first codebook, *o*₂ denotes a distance sampling point index in the vertical dimension corresponding to the codeword in the first codebook, *l=* 0,1,···,*N*₁*O*₁ -1, *m =* 0,1,···,*N*₂*O*₂ -1, *o*₁ *=*1, 2,···,*N*₃*O*₃, *o*₂*=*1,2,···,*N*₄*O*₄; *j* is an imaginary unit, *λ* denotes a wavelength of the wireless signal, *dₓ* denotes an antenna spacing of the first antenna array in the horizontal dimension, *Dₓ* denotes a length of the first antenna array in the horizontal dimension, *d_{z}* denotes an antenna spacing of the first antenna array in the vertical dimension, and *D_{z}* denotes a length of the first antenna array in the vertical dimension.

In conjunction with some embodiments of the second aspect, in some embodiments, the antenna port index of the first antenna array satisfies the following condition: *n*₁ ∈{-(*N*₁ -1)/2,···,0,···(*N*₁ -1)/2}; *n*₂ ∈{*-*(*N*₂ -1)/2,*···*,0,···(*N*₂ -1)/2}.

In conjunction with some embodiments of the second aspect, in some embodiments, an initial phase of the basis vector in the first codebook is zero;
the ${n}_{1}^{′}$ -th element ${ν}_{{n}_{1}^{′}}$ of the first basis vector *v* is: ${ν}_{{n}_{1}^{′}} = exp \left(j\frac{2 π}{λ}\left(\frac{2 {ln}_{1}^{′} {d}_{x}}{{N}_{1} {O}_{1}}-\frac{\left({\left({n}_{1}^{′}\right)}^{2}-{n}_{1}^{′}\left({N}_{1}+1\right)\right) {d}_{x}^{2} {λN}_{3}^{2} {O}_{3}^{2}}{4 {o}_{1}^{2} {D}_{x}^{2}}\right)\right)$; the ${n}_{2}^{′}$-th element ${u}_{{n}_{2}^{′}}$ of the second basis vector *u* is: ${u}_{{n}_{2}^{′}} = exp \left(j\frac{2 π}{λ}\left(\frac{2 {mn}_{2}^{′} {d}_{z}}{{N}_{2} {O}_{2}}-\frac{\left({\left({n}_{2}^{′}\right)}^{2}-{n}_{2}^{′}\left({N}_{2}+1\right)\right) {d}_{z}^{2} {λN}_{4}^{2} {O}_{4}^{2}}{4 {o}_{2}^{2} {D}_{z}^{2}}\right)\right)$.

In conjunction with some embodiments of the second aspect, in some embodiments, the antenna spacing in both the horizontal and vertical dimensions of the first antenna array is $\frac{λ}{2} , {D}_{x} = {N}_{1} \frac{λ}{2}$, and ${D}_{y} = {N}_{1} \frac{λ}{2}$; the ${n}_{1}^{′}$-th element ${ν}_{{n}_{1}^{′}}$ of the first basis vector *v* is: ${ν}_{{n}_{1}^{′}} = exp \left(\frac{j 2 {πln}_{1}^{′}}{{N}_{1} {O}_{1}}-\frac{jπ \left({\left({n}_{1}^{′}\right)}^{2}-{n}_{1}^{′}\left({N}_{1}+1\right)\right) {N}_{3}^{2} {O}_{3}^{2}}{2 {o}_{1}^{2} {N}_{1}^{2}}\right)$; the ${n}_{2}^{′}$-th element ${u}_{{n}_{2}^{′}}$ of the second basis vector *u* is: ${u}_{{n}_{2}^{′}} = exp \left(\frac{j 2 {πmn}_{2}^{′}}{{N}_{2} {O}_{2}}-\frac{jπ \left({\left({n}_{2}^{′}\right)}^{2}-{n}_{2}^{′}\left({N}_{2}+1\right)\right) {N}_{4}^{2} {O}_{4}^{2}}{2 {o}_{2}^{2} {N}_{2}^{2}}\right)$.

In conjunction with some embodiments of the second aspect, in some embodiments, the first information includes at least one of the following: a first indication field, indicating the angle sampling point index of the first codeword in the horizontal dimension; a second indication field, indicating the angle sampling point index of the first codeword in the vertical dimension; a third indication field, indicating the distance sampling point index of the first codeword in the horizontal dimension; a fourth indication field, indicating the distance sampling point index of the first codeword in the vertical dimension.

In conjunction with some embodiments of the second aspect, in some embodiments, the first indication field at least includes $\left⌈{log}_{2} {N}_{1}{O}_{1}\right⌉$ bits; the second indication field at least includes $\left⌈{log}_{2} {N}_{2}{O}_{2}\right⌉$ bits; the third indication field at least includes $\left⌈{log}_{2} {N}_{3}{O}_{3}\right⌉$ bits; the fourth indication field at least includes $\left⌈{log}_{2} {N}_{4}{O}_{4}\right⌉$ bits.

In conjunction with some embodiments of the second aspect, in some embodiments, the first codebook is used for single-polarization single-layer transmission; or, the first codebook is used for dual-polarization multi-layer transmission, wherein the first codebook is constructed based on the angle parameter, the distance parameter, and a co-phase coefficient.

In conjunction with some embodiments of the second aspect, in some embodiments, the metho further includes: sending, by the terminal, second information to the network device, wherein the second information indicates the co-phase coefficient corresponding to the first codeword.

In conjunction with some embodiments of the second aspect, in some embodiments, the co-phase coefficient includes at least one of: Binary Phase Shift Keying (BPSK), Quadruple Phase Shift Keying (QPSK), and Eight-Phase Phase Shift Keying (8-PSK).

In the third aspect, embodiments of this disclosure provide a terminal, the terminal including: a processing module, configured to determine a first codeword in a first codebook, wherein the first codebook is constructed based on an angle parameter and a distance parameter, the first codebook is a codebook used by the terminal in a near-field region of a first antenna array, the first antenna array is an antenna array of the network device for transmitting wireless signals to the terminal; a transceiver module, configured to send first information to the network device, wherein the first information indicates the angle parameter and the distance parameter corresponding to the first codeword.

In a fourth aspect, embodiments of this disclosure provide a network device, the network device including: a transceiver module, configured to receive first information sent by a terminal, wherein the first information indicates an angle parameter and a distance parameter corresponding to the first codeword, the first codeword is a codeword in the first codebook, the first codebook is constructed based on an angle parameter and a distance parameter, the first codebook is a codebook used by the terminal in a near-field region of a first antenna array, the first antenna array is an antenna array of the network device for transmitting wireless signals to the terminal.

In a fifth aspect, embodiments of this disclosure provide a terminal, including: one or more processors; and a memory coupled to the one or more processors, wherein the memory includes executable instructions, which, when executed by the one or more processors, cause the terminal to perform the communication method of the first aspect.

In a sixth aspect, embodiments of this disclosure provide a network device, including: one or more processors; and a memory coupled to the one or more processors, wherein the memory includes executable instructions, which, when executed by the one or more processors, cause the network device to perform the communication method of the second aspect.

In a seventh aspect, embodiments of this disclosure provide a communication system, the communication system including: a terminal and a network device; wherein the terminal is configured to perform the method described in the optional implementation of the first aspect, and the network device is configured to perform the method described in the optional implementation of the second aspect.

In an eighth aspect, embodiments of this disclosure provide a storage medium storing instructions, which, when executed on a communication device, cause the communication device to perform the method described in the optional implementations of the first and second aspects.

In a ninth aspect, embodiments of this disclosure provide a program product, which, when executed by a communication device, causes the communication device to perform the method described in the optional implementations of the first and second aspects.

In a tenth aspect, embodiments of this disclosure provide a computer program that, when run on a computer, causes the computer to perform the methods described in the optional implementations of the first and second aspects.

In an eleventh aspect, embodiments of this disclosure provide a chip or chip system. The chip or chip system includes a processing circuit configured to perform the methods described in the optional implementations of the first and second aspects.

It can be understood that, the aforementioned terminals, network devices, communication systems, storage media, program products, computer programs, chips, or chip systems are all used to perform the methods provided in the embodiments of this disclosure. Therefore, the beneficial effects that can be achieved can be referred to the beneficial effects in the corresponding methods, and will not be repeated here.

Embodiments of this disclosure provide a communication method, a terminal, a network device, a communication system, and a storage medium. In some embodiments, the terms "communication method", "codebook determination method" and "codeword reporting method" or the like can be interchanged; the terms "communication device", "codebook determination device" and "codeword reporting device" or the like can be interchanged; and the terms "information processing system" and "communication system" or the like can be interchanged.

The embodiments disclosed herein are not exhaustive, but merely illustrative of some embodiments, and are not intended to limit the scope of protection of this disclosure. Unless contradictory, each step in a particular embodiment can be implemented as an independent embodiment, and the steps can be arbitrarily combined. For example, a solution after removing some steps in a particular embodiment can also be implemented as an independent embodiment, and the order of the steps in a particular embodiment can be arbitrarily interchanged. Furthermore, the optional implementation methods in a particular embodiment can be arbitrarily combined; moreover, the embodiments can be arbitrarily combined. For example, some or all steps of different embodiments can be arbitrarily combined, and a particular embodiment can be arbitrarily combined with optional implementations of other embodiments.

In each embodiment of this disclosure, unless otherwise specified or logically conflicting, the terminology and/or descriptions between the embodiments are consistent and can be mutually referenced. Technical features in different embodiments can be combined to form new embodiments based on their inherent logical relationships.

The terminology used in the embodiments of this disclosure is only for the purpose of describing specific embodiments and is not intended to limit this disclosure.

In the embodiments of this disclosure, unless otherwise stated, elements expressed in the singular form, such as "a", "an", "the", "above", "said", "aforementioned" "this" etc., can mean "one and only one", "one or more" or "at least one" etc. For example, when using articles such as "a", "an", "the" or the like in translation, the noun following the article can be understood as either a singular or a plural expression.

In embodiments of this disclosure, "a plurality of" refers to two or more.

In some embodiments, terms such as "at least one of", "one or more", "a plurality of" and "multiple" can be used interchangeably.

In some embodiments, "at least one of A and B", "A and/or B", "A in one situation, B in another situation", "in response to one situation A, in response to another situation B", etc., may include the following technical solutions depending on the situation: in some embodiments, A (A executed independently of B); in some embodiments, B (B executed independently of A); in some embodiments, selective execution from A and B (A and B are selectively executed); in some embodiments, A and B (both A and B are executed). The same applies when there are more branches such as A, B, C, etc.

In some embodiments, "A or B" etc., may include the following technical solutions depending on the situation: in some embodiments, A (A executed independently of B); in some embodiments, B (B executed independently of A); in some embodiments, selective execution from A and B (A and B are selectively executed). The same applies when there are more branches such as A, B, C, etc.

The prefixes such as "first", "second" or the like in the embodiments of this disclosure are merely for distinguishing different described objects and do not constitute restrictions on the position, order, priority, number, or content of the described objects. For the description of the described objects, please refer to the description in the claims or the context of the embodiments, and the use of prefixes should not constitute unnecessary restrictions. For example, if the described object is "field", then the ordinal numbers preceding "field" in "first field" and "second field" do not restrict the position or order of the "field", "first" and "second" do not restrict whether the "fields" they modify are in the same message, nor do they restrict the order of "first field" and "second field." As another example, if the described object is "level", then the ordinal numbers preceding "level" in "first level" and "second level" do not restrict the priority between "levels". For another example, the number of described objects is not limited by ordinal numbers, which can be one or more. For example, for "first apparatus", the number of "apparatus" can be one or more. Furthermore, objects modified by different prefixes can be the same or different. For instance, if the described object is "apparatus", then "first apparatus" and "second apparatus" can be the same apparatus or different apparatuses, and their types can be the same or different. Similarly, if the described object is "information", then "first information" and "second information" can be the same information or different information, and their content can be the same or different.

In some embodiments, "including A", "containing A", "for indicating A" and "carrying A" can be interpreted as directly carrying A or indirectly indicating A.

In some embodiments, terms such as "time/frequency" and "time-frequency domain" refer to the time domain and/or frequency domain.

In some embodiments, terms such as "in response to...", "in response to determining... ", "in a case that...", "at the time of...", "when...", "if...", "assuming that..." or the like can be used interchangeably.

In some embodiments, terms such as "greater than", "greater than or equal to", "not less than", "more than", "more than or equal to", "not smaller than", "higher", "higher than or equal to", "not lower than", "above" or the like can be used interchangeably, and terms such as "smaller than", "smaller than or equal to", "not greater than", "less than", "less than or equal to", "no more than", "lower than", "lower than or equal to", "not higher than", "below" or the like can be used interchangeably.

In some embodiments, apparatus or the like can be interpreted as physical or virtual, and its name is not limited to the names described in the embodiments, "apparatus", "equipment", "device", "circuit", "network element", "node", "function", "unit", "section", "system", "network", "chip", "chip system", "entity", "subject" etc., can be used interchangeably.

In some embodiments, "network" can be interpreted as apparatuses included in the network, such as an access network device, a core network device, etc.

In some embodiments, "access network device (AN device)", "radio access network device (RAN device)", "base station (BS)", "radio base station", "fixed station", "node", "access point", "transmission point (TP)", "reception point (RP)", "transmission/or reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)", etc., can be used interchangeably.

In some embodiments, "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", etc., can be used interchangeably.

In some embodiments, the access network device, the core network device, or the network device can be replaced with the terminal. For example, embodiments of this disclosure can also be applied to structures where communication between access network devices, core network devices, or network devices and terminals is replaced with communication between multiple terminals, e.g., device-to-device (D2D), vehicle-to-everything (V2X), etc. In this case, the terminal can also be configured to have all or some of the functions of the access network device. Furthermore, terms such as "uplink" and "downlink" can be replaced with terms (e.g., "side") corresponding to communication with terminals. For example, uplink channel, downlink channel, etc., can be replaced with side channel, uplink link, downlink link, etc., can be replaced with side link.

In some embodiments, the terminal can be replaced with an access network device, a core network device, or a network device. In this case, the access network device, the core network device, or the network device can also be configured to have all or some of the functions of the terminal.

In some embodiments, the acquisition of data, information or the like may comply with the laws and regulations of the country where the acquisition takes place.

In some embodiments, data, information, etc., may be acquired after obtaining the user consent.

Furthermore, each element, each row, or each column in the tables of embodiments of this disclosure can be implemented as an independent embodiment, and any combination of any element, any row, or any column can also be implemented as an independent embodiment.

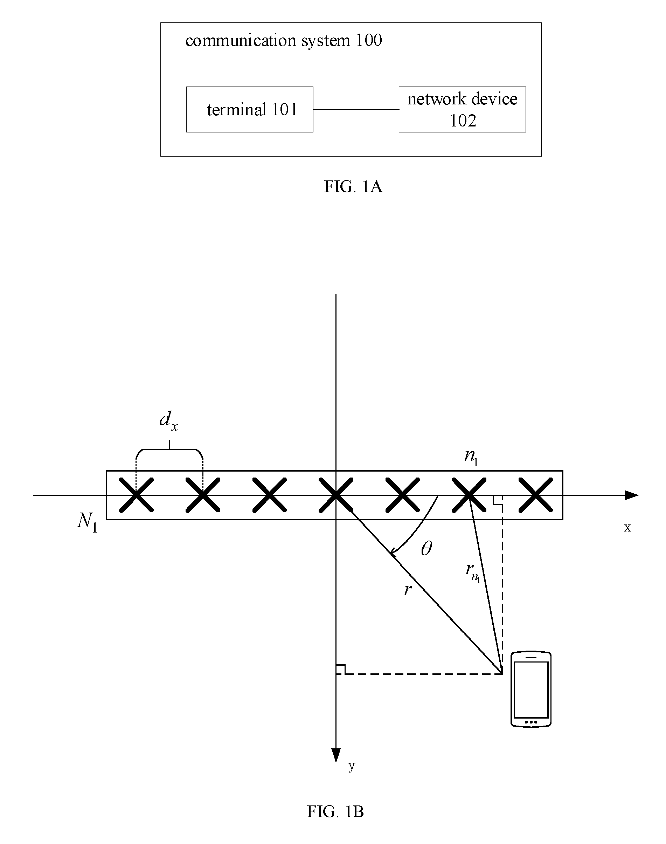

FIG. 1A is a schematic diagram of a communication system architecture according to an embodiment of this disclosure (only including the entities related to the inventive point and their important counterparts in the system diagram; the number of entities corresponds to the number of entities involved in the inventive point).

As shown in FIG. 1A, the communication system 100 includes a terminal 101 and a network device 102. In some embodiments, the network device 102 may include at least one of an access network device and a core network device.

In some embodiments, the terminal 101 includes, for example, at least one of the following: a mobile phone, a wearable device, Internet of Things device, a car with communication capabilities, a smart car, a Pad, a computer with wireless transceiver capabilities, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, and a wireless terminal device in smart home, but is not limited thereto.

In some embodiments, the access network device is, for example, a node or a device that connects a terminal to a wireless network. The access network device may include at least one of the following: an evolved NodeB (eNB) in a 5G communication system, a next generation eNB (ng-eNB), a next generation NodeB (gNB), a NodeB (NB), a home NodeB (HNB), a home evolved NodeB (HeNB), a wireless relay device, a radio network controller (RNC), a base station controller (BSC), a base transceiver station (BTS), a base band unit (BBU), a mobile switching center, a base station in a 6G communication system, an Open RAN, a Cloud RAN, a base station in other communication systems, or an access node in a Wi-Fi system, but not limited thereto.

In some embodiments, the technical solutions of this disclosure are applicable to Open RAN architectures. In this case, the interfaces between or within access network devices involved in the embodiments of this disclosure can become internal interfaces of Open RAN. The processes and information interactions between these internal interfaces can be implemented through software or programs.

In some embodiments, the access network device can be composed of a central unit (CU) and a distributed unit (DU), wherein the CU can also be called a control unit. By adopting a CU-DU architecture, the protocol layers of the access network device can be split. The functions of some protocol layers are centrally controlled by the CU, while the functions of the remaining part or all of the other protocol layers are distributed in the DU, which is centrally controlled by the CU, but not limited thereto.

In some embodiments, the core network device may be a single device including a first network element, a second network element or the like, or it may be multiple devices or groups of devices, each including all or part of the above first network element and the second network element. The network elements may be virtual or physical. The core network includes, for example, at least one of the Evolved Packet Core (EPC), 5G Core Network (5GCN), and Next Generation Core (NGC).

It can be understood that, the communication system described in embodiments of this disclosure is for the purpose of more clearly illustrating the technical solutions of embodiments of this disclosure and does not constitute a limitation on the technical solutions provided in embodiments of this disclosure. Those skilled in the art will recognize that with the evolution of system architectures and the emergence of new service scenarios, the technical solutions provided in embodiments of this disclosure are also applicable to similar technical problems.

The following embodiments of this disclosure can be applied to the communication system 100 or some of its entities shown in FIG. 1A, but not limited thereto. The entities shown in FIG. 1A are illustrative, the communication system may include all or some of the entities in FIG. 1A, and may also include other entities not shown in FIG. 1A. The number and form of each entity are arbitrary, each entity can be either physical or virtual, the connection relationship between the entities is illustrative; the entities may be unconnected or connected, and the connection can be in any manner, including direct or indirect connections, wired or wireless connections.

The embodiments disclosed herein can be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), Future Radio Access (FRA), New-Radio Access Technology (RAT), New Radio (NR), New radio access (NX), Future generation radio access (FX), Global System for Mobile communications (GSM, a registered trademark), CDMA2000, Ultra Mobile Broadband (UMB), IEEE 802.11 (Wi-Fi, a registered trademark), IEEE 802.16 (WiMAX, a registered trademark), and IEEE 802.20, Ultra-Wideband (UWB), Bluetooth (a registered trademark), Public Land Mobile Network (PLMN) networks, Device-to-Device (D2D) systems, Machine-to-Machine (M2M) systems, Internet of Things (IoT) systems, Vehicle-to-Everything (V2X), systems utilizing other communication methods, and next-generation systems extended based thereon, etc. Furthermore, a combination of multiple systems (e.g., a combination of LTE or LTE-A and 5G, etc.) may also be applied.

In some embodiments, the network device 102 may be a network device in an extra large scale massive multiple input multiple output (XL-MIMO) system. This network device 102 may include a first antenna array that can be used by the network device to transmit wireless signals to the terminal. Optionally, the type of the first antenna array may include, but is not limited to, a uniform linear array; a uniform planar array.

In some embodiments, the radiation range of the antenna array can be divided into a near-field region and a far-field region, the boundaries of which can be represented by the Rayleigh distance, and the Rayleigh distance is proportional to the carrier frequency and the antenna aperture of the antenna array.

FIG. 1B is a schematic diagram of a first antenna array according to an example embodiment. As shown in FIG. 1B, the first antenna array can be modeled on the x-axis of a two-dimensional Cartesian coordinate system, including a horizontal dimension with 7 antenna ports. The spacing between the 7 antenna ports is the same, that is, the first antenna array is a uniform linear array with *N*₁ equal to 7 and *N*₂ equal to 1. The spacing between each antenna port can be *dₓ*. Taking the antenna port with an index of 0 in the horizontal dimension of the first antenna array as the origin (0, 0), the coordinates of the antenna port with an index of *n*₁ in a horizontal dimension can be (*n*₁*dₓ*,0), where *n*₁ is an integer and satisfies *n*₁ ∈ {-(*N*₁ -1)/2,···,0,···(*N*₁ -1)/2}. The horizontal dimension length of the antenna array is *Dₓ*, which can be represented as *Dₓ = N*₁*dₓ* or *Dₓ* = (*N*₁ *-*1)*dₓ*.

If a terminal is located in the x-y plane of this two-dimensional Cartesian coordinate system, the distance between the terminal and the origin is *r,* and the angle with the positive x-axis is *θ* and 0 ≤ *θ* ≤ *π*. In this example, the equivalent antenna aperture in the horizontal dimension of the antenna array is *D̃ₓ* = *Dₓ* sin *θ*, and the Rayleigh distance when the terminal is located in the x-y two-dimensional plane can be calculated as $\frac{2 {{D}^{˜}}_{x}^{2}}{λ} = \frac{2 {D}_{x}^{2} {sin}^{2} θ}{λ}$. Therefore, if the distance between the location of the terminal and the first antenna array is less than or equal to this Rayleigh distance, it can be determined that the terminal is located in the near-field region; otherwise, it can be determined that the terminal is located in the far-field region.

The distance between the antenna port with an index of *n*₁ in the first antenna array and the terminal can be calculated as: ${r}_{{n}_{1}} = \sqrt{{r}^{2} + {n}_{1}^{2} {d}_{x}^{2} - 2 {rn}_{1} {d}_{x} cos θ}$; according to the Taylor formula, the above equation is approximated by a second-order Taylor expansion, therefore the distance between the antenna with an index of *n*₁ in the antenna array and the UE can be approximately calculated as: ${r}_{{n}_{1}} = \sqrt{{r}^{2} + {n}_{1}^{2} {d}_{x}^{2} - 2 {rn}_{1} {d}_{x} cos θ} \approx r - {n}_{1} {d}_{x} cos θ + \frac{{n}_{1}^{2} {d}_{x}^{2} {sin}^{2} θ}{2 r}$.

The single-polarization array response vector of the first antenna array can be calculated as: ${\left[{a}_{ULA}^{near}\left(θ, r\right)\right]}_{{n}_{1}} = exp \left(-j\frac{2 π}{λ}\left(-{n}_{1}{d}_{x} cos θ+\frac{{n}_{1}^{2} {d}_{x}^{2} {sin}^{2} θ}{2 r}\right)\right)$.

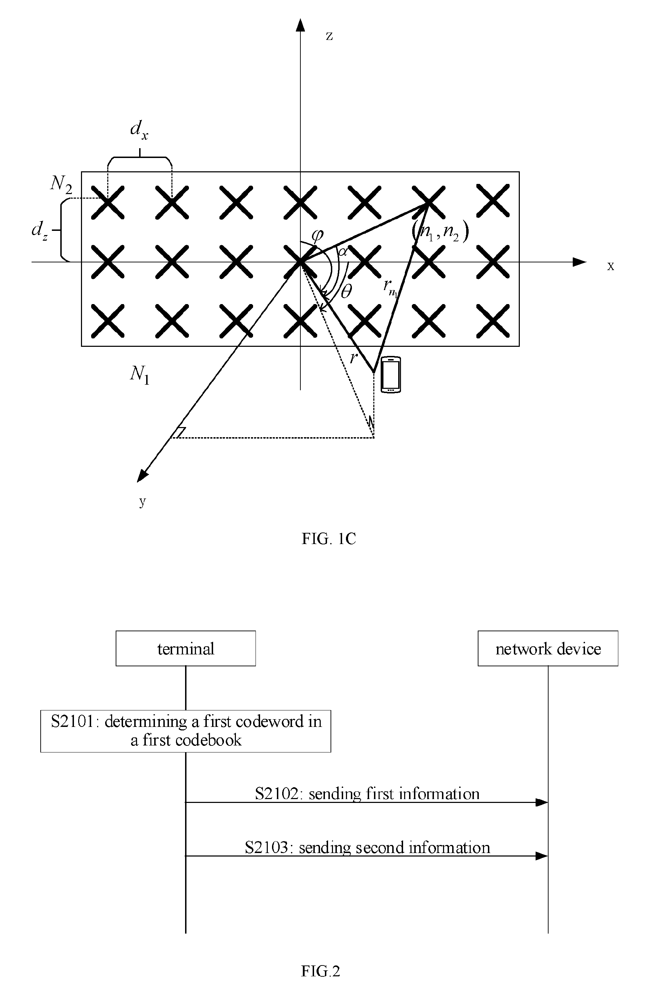

FIG. 1C is a schematic diagram of a first antenna array according to an example embodiment. As shown in FIG. 1C, the first antenna array can be modeled on the x-y plane of a three-dimensional Cartesian coordinate system. The antenna array has 21 antenna ports, with 7 antenna ports in the horizontal dimension and 3 antenna ports in the vertical dimension. The spacing between each antenna port is the same in its respective dimension; that is, the first antenna array is a uniform planar array with *N*₁ equal to 7 and *N*₂ equal to 3. The spacing between antenna ports in the horizontal dimension can be *dₓ,* and the spacing between antenna ports in the vertical dimension can be *d_{z}*. Taking the antenna port with indices of 0 in both the horizontal and vertical dimensions of the first antenna array as the origin (0, 0, 0), the coordinate of the antenna with indices of (*n*₁,*n*₂) in both the horizontal and vertical dimensions of the antenna array is (*n*₁*dₓ*,0,*n*₂*d_{z}*), where *n*₁ and *n*₂ are integers and satisfy *n*₁ ∈{-(*N*₁ -1)/2,···,0,···(*N*₁ -1)/2} and *n*₂ ∈ {-(*N*₂ -1)/2,*···*,0,···(*N*₂ -1)/2}.

If a terminal is located in the x-y-z space of this three-dimensional Cartesian coordinate system, the distance between the terminal and the origin is *r*, the angle with the positive x-axis is *θ* and 0≤*θ*≤*π*, and the angle with the positive z-axis is *φ* and 0≤*φ*≤*π*, where, according to geometric relationships, cos*α* =-cos*θ*sin*φ* . In this example, the equivalent antenna aperture in the horizontal dimension of the antenna array is *D̃ₓ* = *Dₓ* sin*θ*, and the equivalent antenna aperture in the vertical dimension is *D̃_{z} = D_{z}* sin*φ*. When the terminal is located in the x-y-z three-dimensional space, the Rayleigh distance in the horizontal dimension can be calculated as $\frac{2 {{D}^{˜}}_{x}^{2}}{λ} = \frac{2 {D}_{x}^{2} {sin}^{2} α}{λ}$, and the Rayleigh distance in the vertical dimension can be calculated as $\frac{2 {{D}^{˜}}_{z}^{2}}{λ} = \frac{2 {D}_{z}^{2} {sin}^{2} φ}{λ}$. Thus, if the distance between the location of the terminal and the first antenna array is less than or equal to this Rayleigh distance in the horizontal and/or vertical dimensions, it can be determined that the terminal is located in the near-field region.

The distance between the antenna port with index (*n*₁,*n*₂) in the first antenna array and the terminal can be calculated as: ${r}_{{n}_{1} , {n}_{2}} = \sqrt{{r}^{2} + {n}_{1}^{2} {d}_{x}^{2} + {n}_{2}^{2} {d}_{z}^{2} - 2 {rn}_{1} {d}_{x} cos θ sin φ - 2 {rn}_{2} {d}_{z} cos φ}$; according to the Taylor formula, the above equation is approximated by a second-order Taylor expansion, therefore the distance between the antenna with index (*n*₁,*n*₂) in the antenna array and the terminal can be approximately calculated as:
$\begin{matrix}{r}_{{n}_{1} , {n}_{2}} = \sqrt{{r}^{2} + {n}_{1}^{2} {d}_{x}^{2} + {n}_{2}^{2} {d}_{z}^{2} - 2 {rn}_{1} {d}_{x} cos θ sin φ - 2 {rn}_{2} {d}_{z} cos φ} \\ \approx r - {n}_{1} {d}_{x} cos θ sin φ + \frac{{n}_{1}^{2} {d}_{x}^{2} \left(1-{cos}^{2}{θsin}^{2}φ\right)}{2 r} - {n}_{2} {d}_{z} cos φ + \frac{{n}_{2}^{2} {d}_{z}^{2} {sin}^{2} φ}{2 r} .\end{matrix}$

The single-polarization array response vector of the first antenna array can be calculated as:
${a}_{UPA}^{near} \left(θ, φ, r\right) = {a}_{x}^{near} \left(θ, φ, r\right) ⊗ {a}_{z}^{near} \left(φ, r\right) ;$
${\left[{a}_{x}^{near}\left(θ, φ, r\right)\right]}_{{n}_{1}} = exp \left(-j\frac{2 π}{λ}\left(-{n}_{1}{d}_{x} cos θ sin φ+\frac{{n}_{1}^{2} {d}_{x}^{2} \left(1-{cos}^{2} θ {sin}^{2} φ\right)}{2 r}\right)\right) ;$
${\left[{a}_{z}^{near}\left(φ, r\right)\right]}_{{n}_{2}} = exp \left(-j\frac{2 π}{λ}\left(-{n}_{2}{d}_{z} cos φ+\frac{{n}_{2}^{2} {d}_{z}^{2} {sin}^{2} φ}{2 r}\right)\right) .$

In some embodiments, only the far-field region is considered, and the channel model and codebook design are only for far-field MIMO. As the antenna array size increases significantly and the frequency band rises, the Rayleigh distance increases to some extent. This makes it easier for terminals in the communication system to enter the near-field region of the antenna array. In the near-field region, electromagnetic waves propagate as spherical waves, while in the far-field region, electromagnetic waves propagate as plane waves. This means that codebook designs for the far-field region cannot guarantee the quality of communication in the near-field region.

It is worth noting that the first antenna arrays in FIGS. 1B and 1C are merely exemplary. The number of antenna ports in the first antenna array can be less than or greater than the number of antenna ports shown in FIGS. 1B and 1C. The embodiments of this disclosure do not limit this. For example, the first antenna array can be an antenna array with 64 ports in both the horizontal and vertical dimensions.

FIG. 2 is an interactive schematic diagram of a communication method according to an embodiment of this disclosure. As shown in FIG. 2, the embodiments of this disclosure relate to a communication method, which includes following steps.

Step S2101, the terminal determines a first codeword in a first codebook.

In some embodiments, the first codebook is a codebook used by the terminal in the near-field region of the first antenna array.

In some embodiments, the terminal determines the first codeword in the first codebook. Optionally, the terminal determines the first codeword in the first codebook based on the measurement results. Optionally, it is determined that the terminal is in the near-field region of the first antenna array based on the measurement results, and then determines the first codeword in the first codebook.

For example, the terminal can first receive the Channel State Information-Reference Signal (CSI-RS) sent by the network device, and perform channel estimation based on the CSI-RS to determine whether it is in the near-field region. Further, the terminal can traverse each codeword in the first codebook to obtain the optimal first codeword.

It is understood that the near-field region of the first antenna array can refer to a location where the terminal is relatively close to the antenna array. For example, if the distance between the terminal and the antenna array in the horizontal and/or vertical dimensions is less than or equal to the Rayleigh distance, it can be determined that the terminal is in the near-field region of the first antenna array.

In some embodiments, the first antenna array is an antenna array through which the network device transmits wireless signals to the terminal. For example, the network device can pre-encode the data in the data stream according to the codewords in the first codebook, so that the wireless signals transmitted by the network device can be accurately and reliably received by the terminal in the near-field region.

In some embodiments, the first codebook is constructed based on angle parameters and distance parameters. Optionally, the terminal determines the angle parameters and distance parameters corresponding to the first codeword in the first codebook.

The angle parameters may include various angles of the near-field region of the first antenna array in the angle domain, and the distance parameters may include various distances of the near-field region of the first antenna array in the distance domain. The first codebook may be a set of codewords corresponding to each angle and each distance; that is, the first codebook can be constructed based on the codewords corresponding to each angle and each distance.

Optionally, the first codebook includes a plurality of codewords corresponding to various angles and various distances in the near-field region. Optionally, each codeword in the first codebook corresponds to a different angle parameter and/or distance parameter. Optionally, at least one of the distance parameter and the angle parameter is different for any two codewords in the first codebook.

In some embodiments, the first antenna array can be any one of the following: a uniform linear array; a uniform planar array. Optionally, the first antenna array can also be a triangular array or a circular array, which is not limited in embodiments of this disclosure.

In some embodiments, the number of antenna ports in the horizontal dimension of the first antenna array is *N*₁, and the number of antenna ports in the vertical dimension is *N*₂, where *N*₁ is greater than or equal to 1, and *N*₂ is greater than or equal to 1.

A uniform linear array can be considered as a special type of uniform planar array, that is, a uniform linear array can be a uniform planar array with 1 antenna port in either the horizontal or vertical dimension.

It can be understood that when *N*₁ or *N*₂ is equal to 1, and the spacing between each antenna port is the same, the first antenna array can be a uniform linear array; when *N*₁ and/or *N*₂ is greater than 1, and the spacing between each antenna port is the same, the first antenna array can be a uniform planar array. The spacing of the antenna ports in the horizontal dimension can be expressed as *dₓ*, the spacing in the vertical dimension can be expressed as *d_{z}*, and the length of the antenna array in the horizontal dimension can be expressed as *Dₓ*, where *Dₓ =N*₁*dₓ* or *Dₓ =*(*N*₁*-*1)*dₓ*, or other representations are possible, which are not limited in embodiments of this disclosure. The vertical dimension length of the antenna array can be represented as *D_{z},* where *D_{z} = N*₂*d_{z}* or *D_{z} =* (*N*₂ -1)*d_{z}*, or other representations are also possible, which is not limited in the embodiment of this disclosure.

In some embodiments, the angle parameter includes at least one of the following: a first angle domain parameter of the near-field region in the horizontal dimension; a second angle domain parameter of the near-field region in the vertical dimension. Optionally, the distance parameter includes a first distance parameter in the horizontal dimension and a second distance parameter in the vertical dimension, wherein the value ranges of the first distance parameter and the second distance parameter may be different.

Optionally, the first angle domain parameter may refer to the set of possible values in the horizontal dimension angle domain when the terminal is in the near-field region, and the second angle domain parameter may refer to the set of possible values in the vertical dimension angle domain when the terminal is in the near-field region.

Referring to FIG. 1C, the terminal may be located in the x-y-z space of a three-dimensional Cartesian coordinate system. The first angle domain parameter corresponding to the first angle domain parameter of the first antenna array in the horizontal dimension may include any possible value of cos *θ* or cos *θ* sin *φ*, and the second angle domain parameter in the vertical dimension may include any possible value of cos *φ*. If the terminal is in the near-field region, the distance *r* between the terminal and the origin is less than or equal to $\frac{2 {D}_{x}^{2} {sin}^{2} α}{λ}$ in the horizontal dimension and/or less than $\frac{2 {D}_{z}^{2} {sin}^{2} φ}{λ}$ in the vertical dimension. Accordingly, the distance parameter can include any possible value of *r* within this range.

It is understood that when *N*₂ is equal to 1 in the first antenna array, i.e., when the first antenna array is a uniform linear array, the second angle domain parameter of the first antenna array in the vertical dimension has only one unique value, i.e., the value of *φ* only includes 90 degrees. Accordingly, the angle parameter corresponding to the antenna array can only include the first angle domain parameter. For example, when constructing the first codebook, only the first angle parameter in the horizontal dimension can be considered, without considering the second angle domain parameter in the vertical dimension.

For example, referring to FIG. 1B, the terminal can be located in the x-y plane of a two-dimensional Cartesian coordinate system. The first angle domain parameter of the first antenna array in the horizontal dimension can include any possible value of cos*θ* or cos *θ* sin *φ*. If the terminal is in the near-field region, the distance *r* between the terminal and the origin is less than or equal to $\frac{2 {D}_{x}^{2} {sin}^{2} θ}{λ}$. Accordingly, the distance parameter can include any possible value of *r* within this range.

In some embodiments, the basis vectors of the first codebook include a first basis vector in the horizontal dimension and a second basis vector in the vertical dimension.

Optionally, the basis vectors of the first codebook can be the Kronecker product of the first basis vector and the second basis vector. For example, the basis vectors of the first codebook can be represented as *v*⊗*u*.

In some embodiments, the ${n}_{1}^{′}$-th element ${ν}_{{n}_{1}^{′}}$ of the first basis vector *v* in the horizontal dimension among the basis vectors of the first codebook is:
${ν}_{{n}_{1}^{′}} = exp \left(j\frac{2 π}{λ}\left({n}_{1}{d}_{x} cosθsinφ-\frac{{n}_{1}^{2} {d}_{x}^{2} \left(1-{cos}^{2} {θsin}^{2} φ\right)}{2 r}\right)\right) ;$
the ${n}_{2}^{′}$-th element ${u}_{{n}_{2}^{′}}$ of the second basis vector *u* in the vertical dimension among the basis vectors of the first codebook is:
   ${u}_{{n}_{2}^{′}} = exp \left(j\frac{2 π}{λ}\left({n}_{2}{d}_{z} cos φ-\frac{{n}_{2}^{2} {d}_{z}^{2} {sin}^{2} φ}{2 r}\right)\right) ;$
where, *n*₁ denotes an antenna port index in the horizontal dimension, *n*₂ denotes an antenna port index in the vertical dimension, ${n}_{1}^{′} = {n}_{1} + \left({N}_{1}+1\right) / 2$, ${n}_{2}^{′} = {n}_{2} + \left({N}_{2}+1\right) / 2$; cos *θ*sin *φ* denotes a first angle domain parameter corresponding to the codeword in the first codebook, cos*φ* denotes a second angle domain parameter corresponding to the codeword in the first codebook, and *r* denotes the distance parameter corresponding to the codeword in the first codebook, -1≤cos*φ*≤1 , -1≤ cos *θ* ≤1, the distance parameter corresponding to the codeword in the first codebook satisfies at least one of the following: $0 < r \leq \frac{2 {D}_{x}^{2} {sin}^{2} θ}{λ} , 0 < r \leq \frac{2 {D}_{x}^{2} {sin}^{2} α}{λ}$ and $0 < r \leq \frac{2 {D}_{z}^{2} {sin}^{2} φ}{λ}$, where cos*α* = -cos *θ*sin*φ* ; *j* is an imaginary unit, *λ* denotes a wavelength of the wireless signal, *dₓ* denotes an antenna spacing of the first antenna array in the horizontal dimension, *Dₓ* denotes a length of the first antenna array in the horizontal dimension, *d_{z}* denotes an antenna spacing of the first antenna array in the vertical dimension, and *D_{z}* denotes a length of the first antenna array in the vertical dimension.

For example, the values of the first and second angle domain parameters range from [-1, 1]. The range of the distance parameter in the horizontal dimension of the near-field region can be $\left(0, \frac{2 {D}_{x}^{2} {sin}^{2} α}{λ}\right]$, and range of the distance parameter in the vertical dimension of the near-field region can be $\left(0, \frac{2 {D}_{z}^{2} {sin}^{2} φ}{λ}\right]$.

It can be understood that the first basis vector v can be used to represent the components of the basis vectors of the first codebook in the horizontal dimension, and the second basis vector *u* can be used to represent the components of the basis vectors of the first codebook in the vertical dimension. Based on the above formula, the codewords corresponding to each first angle domain parameter, each second angle domain parameter, and each distance parameter in the horizontal and distance dimensions can be determined, thereby constructing the first codebook.

It is worth noting that when the first antenna array is a uniform linear array, the number of antenna ports in the vertical dimension can be 1, and the index *n*₂ of the first antenna port in the vertical dimension can only be 0, that is, the second basis vector in the vertical dimension is 1. Thus, the second angle domain parameter and the second basis vector ${u}_{{n}_{2}^{′}}$ can be disregarded. Furthermore, when the first antenna array is a uniform linear array, only whether the terminal is in the near-field region in the horizontal dimension needs to be considered.

That is, when the terminal is in the near-field region only in the horizontal dimension or when the first antenna array is a uniform linear array, the ${n}_{1}^{′}$-th element ${ν}_{{n}_{1}^{′}}$ of the first basis vector *v* in the horizontal dimension among the basis vectors of the first codebook used by the terminal is ${ν}_{{n}_{1}^{′}} = exp \left(j\frac{2 π}{λ}\left({n}_{1}{d}_{x} cosθ-\frac{{n}_{1}^{2} {d}_{x}^{2} {sin}^{2} θ}{2 r}\right)\right)$; the basis vector in the vertical dimension is 1; where -1≤cos*θ*≤1, $0 < r \leq \frac{2 {D}_{x}^{2} {sin}^{2} θ}{λ}$.

In some of the above optional embodiments, the first angle domain parameter, the second angle domain parameter, and the distance parameter are each a continuous value rang, which leads to an excessive number of codewords in the first codebook and excessive resource overhead.

With regard to this, in some embodiments, the angle parameter and the distance parameter can be quantized in the vertical and horizontal dimensions respectively. For example, the first angle parameter, the second angle parameter, the first distance parameter, and the second distance parameter can be quantized separately.

For example, the total number of sampling points corresponding to each parameter can be predetermined, and quantization can be performed based on the total number of sampling points corresponding to each parameter. Alternatively, sampling parameters corresponding to each parameter can be predefined, and quantization can be performed based on the sampling parameters corresponding to each parameter. Sampling parameters may include, for example, the number of sampling points and an oversampling factor.

In some embodiments, the angle parameter includes *N*₁*O*₁ angle sampling points obtained by quantizing a first angle domain parameter of the near-field region in the horizontal dimension, and/or *N*₂*O*₂ angle sampling points obtained by quantizing a second angle domain parameter of the near-field region in the vertical dimension;
the distance parameter includes *N*₃*O*₃ distance sampling points obtained by quantizing a first distance domain parameter of the near-field region in the horizontal dimension, and/or *N*₄*O*₄ distance sampling points obtained by quantizing a second distance domain parameter of the near-field region in the vertical dimension;
where, *N*₃ denotes the number of sampling points for the distance parameter in the horizontal dimension, *N*₄ denotes the number of sampling points for the distance parameter in the vertical dimension, *O*₁ denotes an oversampling factor of the angle parameter in the horizontal dimension, *O*₂ denotes an oversampling factor of the angle parameter in the vertical dimension, *O*₃ denotes an oversampling factor of the distance parameter in the horizontal dimension, and *O*₄ denotes an oversampling factor of the distance parameter in the vertical dimension. Optionally, the sampling points for the angle parameter in the horizontal dimension may be a subset of the set of possible values in the horizontal dimension angle domain when the terminal is in the near-field region; the sampling points for the angle parameter in the vertical dimension may be a subset of the set of possible values in the vertical dimension angle domain when the terminal is in the near-field region.

Optionally, the first distance domain parameter can refer to the set of possible values of the terminal in the horizontal dimension within the near-field region, and the sampling points of the distance parameter in the horizontal dimension can be a subset of this set. The second distance domain parameter can refer to the set of possible values of the terminal in the vertical dimension within the near-field region, and the sampling points of the distance parameter in the vertical dimension can be a subset of this set.

Optionally, whether the angle parameter includes angle sampling points in the vertical dimension, or whether the distance parameter includes distance sampling points in the vertical dimension can be determined based on the type of the first antenna array. For example, when the first antenna array is a uniform linear array, the angle parameter may not include the second angle domain parameter in the vertical dimension, and therefore, there is no need to sample the second angle domain parameter.

It is understood that quantizing the above parameters can mean sampling the above continuous parameters to obtain a set of corresponding discrete sampling points. For example, quantizing the first angle domain can mean sampling the possible values of cos*θ* or cos *θ* sin *φ*, to obtain *N*₁*O*₁ angle sampling points.

The values of *O*₁, *O*₂, *O*₃ and *O*₄ can be determined according to the precision requirements of the first codebook, for example, all of them can be 1 or all of them can be 3, etc. The embodiment of this disclosure does not limit this; the higher the value is, the higher the precision of the codeword in the corresponding first codebook is.

For example, the first antenna array is a uniform linear array. The angle parameters include *N*₁*O*₁ angle sampling points obtained by quantizing cos*θ*, and the distance parameters include *N*₃*O*₃ distance sampling points obtained by quantizing the first distance domain parameters.

For a codeword in the first codebook with an angle sampling point index of *l* and a distance sampling point index of *o*₁ in the horizontal dimension, when $0 \leq \frac{2 l}{{N}_{1} {O}_{1}} \leq 1$, the first angle domain parameter corresponding to the codeword is $cos θ = \frac{2 l}{{N}_{1} {O}_{1}}$, and when $1 < \frac{2 l}{{N}_{1} {O}_{1}} < 2$, the first angle parameter corresponding to the codeword is $cos θ = \frac{2 l}{{N}_{1} {O}_{1}} - 2$, and the first distance domain parameter corresponding to the codeword is $r = \frac{2 {o}_{1}^{2} {D}_{x}^{2} {sin}^{2} θ}{{λN}_{3}^{2} {O}_{3}^{2}}$.

In another example, the first antenna array is a uniform planar array. The angle parameters include *N*₁*O*₁ angle sampling points obtained by quantizing cos*θ*sin*φ* and *N₂O₂* angle sampling points obtained by quantizing cos*φ*, and the distance parameters include *N*₃*O*₃ distance sampling points obtained by quantizing the first distance domain parameters and *N*₃*O*₃ distance sampling points obtained by quantizing the second distance domain parameters.

For a codeword in the first codebook with the angle sampling point index of *l* in the horizontal dimension, the angle sampling point index of *m* in the vertical dimension, the distance sampling point index *o*₁ in the horizontal dimension, and the distance sampling point index of *o*₂ in the vertical dimension, when $0 \leq \frac{2 l}{{N}_{1} {O}_{1}} \leq 1$, the first angle domain parameter corresponding to the codeword is $cos θ sin φ = \frac{2 l}{{N}_{1} {O}_{1}}$, when $1 < \frac{2 l}{{N}_{1} {O}_{1}} < 2$, the first angle domain parameter corresponding to the codeword is $cos θ sin φ = \frac{2 l}{{N}_{1} {O}_{1}} - 2$, when $0 \leq \frac{2 m}{{N}_{2} {O}_{2}} \leq 1$, the second angle domain parameter corresponding to the codeword is $cos φ = \frac{2 m}{{N}_{2} {O}_{2}}$, when $1 < \frac{2 m}{{N}_{2} {O}_{2}} < 2$, the second angle domain parameter corresponding to the codeword is $cos φ = \frac{2 m}{{N}_{2} {O}_{2}} - 2$, the first distance domain parameter corresponding to the codeword is $r = \frac{2 {o}_{1}^{2} {D}_{x}^{2} {sin}^{2} α}{{λN}_{3}^{2} {O}_{3}^{2}}$, and the second distance domain parameter corresponding to the codeword is $r = \frac{2 {o}_{2}^{2} {D}_{z}^{2} {sin}^{2} φ}{{λN}_{4}^{2} {O}_{4}^{2}}$.

In some embodiments, the antenna port index of the first antenna array satisfies the following condition: *n*₁ ∈{-(*N*₁ -1)/2,···,0,···(N₁ -1)/2} ; *n*₂ ∈{1-(*N*₂ -1)/2,*···*,0,···(*N*₂ -1)/2}. Within the first antenna array, taking an example where the number of antenna ports in both the horizontal and vertical dimensions is odd, the index of the antenna port at the center of the horizontal dimension is 0, the index of the antenna port at the center of the vertical dimension is 0, the value of ${n}_{1}^{′}$ is an integer from 1 to less than *N*₁, and the value of ${n}_{2}^{′}$ is an integer from 1 to less than *N*₂.

In some embodiments, the initial phase of the basis vector in the first codebook is zero. The initial phase of the first basis vector and the second basis vector in the first codebook can both be zero.

Furthermore, since the following conditions are satisfied, *n*₁ ∈{-(*N*₁ -1)/2,···,0,···(*N*₁ -1)/2} and *n₂* ∈{-(*N*₂ -1)/2,*···*,0,···(*N*₂ -1)/2} and ${n}_{1}^{′} = {n}_{1} + \left({N}_{1}+1\right) / 2$ and ${n}_{2}^{′} = {n}_{2} + \left({N}_{2}+1\right) / 2$, terms unrelated to ${n}_{1}^{′}$ and ${n}_{2}^{′}$ can be removed, thus determining that the ${n}_{1}^{′}$-th element ${ν}_{{n}_{1}^{′}}$ of the first basis vector v in the horizontal dimension among the basis vectors in the first codebook is: ${ν}_{{n}_{1}^{′}} = exp \left(j\frac{2 π}{λ}\left(\frac{2 {ln}_{1}^{′} {d}_{x}}{{N}_{1} {O}_{1}}-\frac{\left({\left({n}_{1}^{′}\right)}^{2}-{n}_{1}^{′}\left({N}_{1}+1\right)\right) {d}_{x}^{2} {λN}_{3}^{2} {O}_{3}^{2}}{4 {o}_{1}^{2} {D}_{x}^{2}}\right)\right)$; and the ${n}_{2}^{′}$-th element ${u}_{{n}_{2}^{′}}$ of the second basis vector *u* in the vertical dimension among the basis vectors in the first codebook is: ${u}_{{n}_{2}^{′}} = exp \left(j\frac{2 π}{λ}\left(\frac{2 {mn}_{2}^{′} {d}_{z}}{{N}_{2} {O}_{2}}-\frac{\left({\left({n}_{2}^{′}\right)}^{2}-{n}_{2}^{′}\left({N}_{2}+1\right)\right) {d}_{z}^{2} {λN}_{4}^{2} {O}_{4}^{2}}{4 {o}_{2}^{2} {D}_{z}^{2}}\right)\right)$.

In some embodiments, the antenna spacing in both the horizontal and vertical dimensions of the first antenna array is $\frac{λ}{2} , {D}_{x} = {N}_{1} \frac{λ}{2}$, and ${D}_{y} = {N}_{1} \frac{λ}{2}$; the ${n}_{1}^{′}$-th element ${ν}_{{n}_{1}^{′}}$ of the first basis vector v in the horizontal dimension among the basis vectors in the first codebook is: ${ν}_{{n}_{1}^{′}} = exp \left(\frac{j 2 {πln}_{1}^{′}}{{N}_{1} {O}_{1}}-\frac{jπ \left({\left({n}_{1}^{′}\right)}^{2}-{n}_{1}^{′}\left({N}_{1}+1\right)\right) {N}_{3}^{2} {O}_{3}^{2}}{2 {o}_{1}^{2} {N}_{1}^{2}}\right)$; the ${n}_{2}^{′}$-th element ${u}_{{n}_{2}^{′}}$ of the second basis vector *u* in the vertical dimension among the basis vectors in the first codebook is: ${u}_{{n}_{2}^{′}} = exp \left(\frac{j 2 {πmn}_{2}^{′}}{{N}_{2} {O}_{2}}-\frac{jπ \left({\left({n}_{2}^{′}\right)}^{2}-{n}_{2}^{′}\left({N}_{2}+1\right)\right) {N}_{4}^{2} {O}_{4}^{2}}{2 {o}_{2}^{2} {N}_{2}^{2}}\right)$.

It is understood that in the above embodiments, if the first antenna array is a uniform linear array, the second basis vector of the first codebook in the vertical dimension in the above embodiments is 1, and the construction of the first codebook does not require the participation of angle parameters and/or distance parameters in the vertical dimension.

In some embodiments, the first codebook can be used for single-polarization single-layer transmission. Optionally, the first codebook can also be used for dual-polarization multi-layer transmission.

It can be understood that if the first codebook considers dual-polarization multi-layer transmission, a co-phase coefficient between polarization directions can be introduced, such as QPSK co-phase coefficients {1, -1, j, -j}, etc.

Optionally, when the first codebook is used for dual-polarization multi-layer transmission, the first codebook can be constructed based on angle parameters, distance parameters, and co-phase coefficients. For example, a codebook for single-polarization single-layer transmission can be constructed based on the angle and distance parameters in any of the above embodiments, and this codebook can then be further processed according to the co-phase coefficients, to obtain a first codebook for dual-polarization multi-layer transmission.

In some embodiments, the co-phase coefficient includes at least one of: Binary Phase Shift Keying (BPSK), Quadruple Phase Shift Keying (QPSK), and Eight-Phase Phase Shift Keying (8-PSK).

In some embodiments, the near-field codebook is used for single-polarization single-layer transmission; or, the near-field codebook is used for dual-polarization multi-layer transmission. The near-field codebook can be constructed based on a first basis vector, a second basis vector, and the co-phase coefficients, or angle parameters, distance parameters, and the co-phase coefficients.

In dual-polarization multi-layer transmission, in the case of QPSK, the co-phase coefficients can be any one of the four values [1, -1, j, -j]; in the case of BPSK, the co-phase coefficients can be any one of [1, -1]; and in the case of 8PSK, the co-phase coefficients can be any one of eight values $\left[1,-1,j,-j,\frac{1}{\sqrt{2}}\left(1+j\right),\frac{1}{\sqrt{2}}\left(1-j\right),\frac{1}{\sqrt{2}}\left(-1+j\right),\frac{1}{\sqrt{2}}\left(-1-j\right)\right]$. Optionally, the near-field codebook may include codewords constructed based on each angle parameter, each distance parameter, and each co-phase coefficient.

In some embodiments, the first codeword may be the optimal codeword for the terminal in the first codebook constructed according to any of the above embodiments. The optimal codeword for the terminal may be the codeword corresponding to the terminal's current location.

For example, the angle parameter corresponding to the first codeword may be used to indicate the angle domain information of the terminal relative to the first antenna array, and the distance parameter corresponding to the first codeword may be used to indicate the distance domain information of the terminal relative to the first antenna array.

Step S2102, the terminal sends first information to the network device.

In some embodiments, the first information is used to indicate the first codeword. Optionally, the first information is used to indicate the angle parameter and distance parameter corresponding to the first codeword.

In some embodiments, the angle parameter and distance parameter corresponding to the first codeword may be the angle parameter and distance parameter corresponding to the optimal codeword obtained by the terminal traversing all codewords in the first codebook.

In some embodiments, the first information includes at least one of the following: first indication information, indicating a first angle domain parameter corresponding to the first codeword; second indication information, indicating a second angle domain parameter corresponding to the first codeword; third indication information, indicating the distance parameter corresponding to the first codeword.

Optionally, the network device can determine the first codeword based on one or more of the first indication information, the second indication information, and the third indication information.

The first codebook can be constructed based on at least one of the first angle domain parameter and the second angle parameter, and the distance parameter.

It can be understood that the first angle domain parameter and/or the second angle domain parameter corresponding to the first codeword can be any value in [-1, 1], and the distance parameter corresponding to the first codeword can be any value in $\left(0\right.$, $\left.\frac{2 {o}_{1}^{2} {D}_{x}^{2} {sin}^{2} α}{{λN}_{3}^{2} {O}_{3}^{2}}\right]$ or $\left(0, \left.\frac{2 {o}_{2}^{2} {D}_{z}^{2} {sin}^{2} φ}{{λN}_{4}^{2} {O}_{4}^{2}}\right]\right)$.

For example, when the first angle domain parameter indicated by the first indication information is 0, the network device can determine that the terminal is located in the x-y plane in the Cartesian coordinate system corresponding to the first antenna array.

In some embodiments, the first information includes at least one of the following: a first indication field, indicating the angle sampling point index of the first codeword in the horizontal dimension; a second indication field, indicating the angle sampling point index of the first codeword in the vertical dimension; a third indication field, indicating the distance sampling point index of the first codeword in the horizontal dimension; a fourth indication field, indicating the distance sampling point index of the first codeword in the vertical dimension.

Optionally, the network device determines the first codeword based on at least one of the first indication domain, the second indication domain, the third indication domain, and the fourth indication domain.

The first codebook can be constructed based on at least one of the quantized first angle domain parameter and the quantized second angle parameter, and the quantized distance parameter.

Optionally, the angle sampling point index of the first codeword in the horizontal dimension can be any integer in [0, *N*₁*O*₁-1], and the angle sampling point index of the first codeword in the vertical dimension can be [0, *N*₂*O*₂*-*1], the distance sampling point index of the first codeword in the horizontal dimension can be any integer in [0, *N*₃*O*₃-1], and the distance sampling point index of the first codeword in the vertical dimension can be any integer in [0, *N*₄*O*₄-1].

In some embodiments, the first indication field at least includes $\left⌈{log}_{2} {N}_{1}{O}_{1}\right⌉$ bits; the second indication field at least includes $\left⌈{log}_{2} {N}_{2}{O}_{2}\right⌉$ bits; the third indication field at least includes $\left⌈{log}_{2} {N}_{3}{O}_{3}\right⌉$ bits; the fourth indication field at least includes $\left⌈{log}_{2} {N}_{4}{O}_{4}\right⌉$ bits. This allows for the reporting of sampling point indices using a minimum number of bits.

In some embodiments, the network device receives first information. Optionally, the network device determines the first codeword based on the first information. Optionally, the network device determines the angle parameter and distance parameter corresponding to the first information based on the first information. Optionally, the network device determines the first codeword based on the angle parameter and distance parameter indicated by the first information.

In some embodiments, the first information can be "codeword indication information", "feedback indication", "codeword information" etc., and the name of the first information is not limited in the embodiment of this disclosure.

Step S2103, the terminal sends second information to the network device.

In some embodiments, the second information is used to indicate the co-phase coefficient corresponding to the first codeword.

In some embodiments, the second information is used to indicate that the first codeword is used for dual-polarization multi-layer transmission. Optionally, the second information is used to indicate that the codebook corresponding to the first codeword is used for dual-polarization multi-layer transmission. In some embodiments, the second information may include N bits, where N is used to indicate the co-phase coefficient. For example, when N is 1, the second information indicates that the co-phase coefficient corresponding to the first codeword is BPSK; when N is 2, the second information indicates that the co-phase coefficient corresponding to the first codeword is QPSK; when N is 3, the second information indicates that the co-phase coefficient corresponding to the first codeword is 8-PSK.

It can be understood that, for QPSK, the co-phase coefficient corresponding to the first codeword can be any one of the four values [1, -1, j, -j], which can be indicated by 2 bits; for BPSK, the co-phase coefficient can be any one of [1, -1], which can be indicated by 1 bit; and for 8PSK, the co-phase coefficient can be any one of eight values $\left[1,-1,j,-j,\frac{1}{\sqrt{2}}\left(1+j\right),\frac{1}{\sqrt{2}}\left(1-j\right),\frac{1}{\sqrt{2}}\left(-1+j\right),\frac{1}{\sqrt{2}}\left(-1-j\right)\right]$, which can be indicated by 3 bits.

For example, when the second information includes 1 bit, if the value of this bit is 1, the co-phase coefficient corresponding to the first codeword can be 1; if the value of this bit is 0, the co-phase coefficient corresponding to the first codeword can be -1.

In some embodiments, the network device receives the second information. Optionally, the network device determines the number of dual-polarization multi-layers for the codebook corresponding to the first codeword based on the second information. Optionally, the network device determines the first codeword based on the first information and the second information.

For example, the network device determines the angle and distance parameters corresponding to the first codeword based on the first information. The network device can also determine the co-phase coefficient corresponding to the first codeword based on the second information. The network device can then determine the codebook with the best communication quality for the terminal and the corresponding codeword, based on the angle parameters, distance parameters, and the co-phase coefficient. This codeword is the first codeword determined by the terminal.

In some embodiments, the first information and the second information can be the same information, for example, different fields within the same information. Optionally, the first information and the second information can also be different information, for example, carried by different information elements. The embodiments of this disclosure do not limit this.

In some embodiments, the second information can be "co-phase coefficient indication information", "transmission type indication information" etc. The embodiments of this disclosure do not limit the name of the second information.

In combination with some embodiments of this disclosure, in one example, for a uniform planar array, the terminal can sample the angle and distance domains of the near-field region of the antenna array in the horizontal and distance dimensions, respectively, and construct a first codebook used by the terminal when it is in the near-field region in both the horizontal and vertical dimensions, based on the basis vectors corresponding to the first codebook.

Furthermore, the terminal can perform channel estimation based on CSI-RS to determine whether it is in the near-field region in both the horizontal and vertical dimensions. If it is determined that it is in the near-field region, it traverses each codeword in the first codebook to determine the codeword with optimal communication quality, i.e., the first codeword, along with the corresponding angle sampling points in the horizontal and vertical dimensions, distance sampling points in the horizontal and vertical dimensions, and the co-phase coefficients. Alternatively, the terminal can determine the optimal basis vectors and the co-phase coefficient in the basis vectors of the first codebook.

Furthermore, the terminal can send the index corresponding to the co-phase coefficient, along with the indices corresponding to the angle sampling points and distance sampling points in the horizontal and vertical dimensions corresponding to the first codeword or the optimal basis vector, to the network device. This allows the network device to determine the first codeword determined by the terminal based on these index values and the basis vectors corresponding to the first codebook, and then transmit wireless signals based on this first codeword.

It can be understood that, the terminal can also construct a first codebook used by the terminal when it is in the near-field region only in either the horizontal or distance dimension, and can also construct a first codebook corresponding to a uniform linear array. Specific implementation details can be found in the descriptions of the above embodiments and will not be repeated here.

In some embodiments, the names of messages, information, etc., are not limited to those described in the embodiments. Terms such as "information", "message", "signal", "signaling", "report", "configuration", "indication", "instruction", "command", "channel", "parameter", "domain", "field", "symbol", "symbol", "codebook", "codeword", "codepoint", "bit", "data", "program" and "chip" are interchangeable.

In some embodiments, terms such as "codebook", "codeword" and "precoding matrix" can be used interchangeably. For example, a codebook can be a collection of one or more codewords/precoding matrices.

In some embodiments, the terms "uplink", "uplink link", and "physical uplink" can be used interchangeably; the terms "downlink", "downlink link", and "physical downlink" can be used interchangeably; and the terms "side", "sidelink", "side communication", "sidelink communication", "direct connection", "direct link", "direct communication", and "direct link communication" can be used interchangeably.

In some embodiments, the terms "downlink control information (DCI)", "downlink (DL) assignment", "DL DCI", "uplink (UL) grant", and "UL DCI" can be used interchangeably.

In some embodiments, the terms "physical downlink shared channel (PDSCH)" and "DL data" can be used interchangeably; and the terms "physical uplink shared channel (PUSCH)" and "UL data" can be used interchangeably.

In some embodiments, the terms "moment", "point in time", "time", and "time location" can be used interchangeably; and the terms "duration", "period", "time window", "window", and "time" can be used interchangeably.

In some embodiments, terms such as wireless access scheme and waveform can be used interchangeably.

In some embodiments, the terms "precoding", "precoder", "weight", "precoding weight", "quasi-co-location (QCL)", "transmission configuration indication (TCI) status", "spatial relation", "spatial domain filter", "transmission power", "phase rotation", "antenna port", "antenna port group", "layer", "the number of layers", "rank", "resource", "resource set", "resource group", "beam", "beam width", "beam angular degree", "antenna", "antenna element", and "panel" can be used interchangeably.

In some embodiments, the terms "frame", "radio frame", "subframe", "slot", "sub-slot", "mini-slot", "symbol", "code element" and "transmission time interval (TTI)" are interchangeable.

In some embodiments, the terms "acquire", "get", "obtain", "receive", "transmit", "bidirectional transmission", and "send and/or receive" are interchangeable and can be interpreted as receiving from other entities, acquiring from protocols, acquiring from higher layers, obtaining through self-processing, or autonomous implementation.

In some embodiments, the terms "send", "transmit", "report", "send", "transmission", "bidirectional transmission", and "send and/or receive" are interchangeable.

In some embodiments, the terms "certain", "preseted", "preset", "set", "indicated", "a certain", "any", and "first" are interchangeable. "Certain A", "preseted A", "preset A", "set A", "indicated A", "a certain A", "any A", and "first A" can be interpreted as A pre-defined in a protocol, or A obtained through setting, configuration, or indication, or a specific A, a certain A, any A, or the first A, but are not limited to these.

In some embodiments, the determination or judgment can be performed using a value (0 or 1) represented by 1 bit, a Boolean value represented as true or false, or by a comparison of numerical values (e.g., a comparison with a predetermined value), but is not limited thereto.

In some embodiments, "not expecting to receive" can be interpreted as not receiving on time-domain and/or frequency-domain resources, or as not performing subsequent processing on the received data; "not expecting to send" can be interpreted as not sending, or as sending but not expecting a response from the receiver.

The communication method involved in the embodiments of this disclosure may include at least one of steps S2101 to S2103. For example, step S2101 may be implemented as a standalone embodiment, step S2102 may be implemented as a standalone embodiment, step S2101 and step S2103 may be implemented as a standalone embodiment, and step S2102 and step S2103 may be implemented as a standalone embodiment, but is not limited thereto.

In some embodiments, steps S2102 and S2103 may be interchanged or executed simultaneously.

In some embodiments, steps S2102 and S2103 are optional, and one or more of these steps may be omitted or substituted in different embodiments.

In some embodiments, steps S2101 and S2103 are optional, and one or more of these steps may be omitted or substituted in different embodiments.

In some embodiments, other optional implementations described before or after the specification corresponding to FIG. 2 may be referred to.

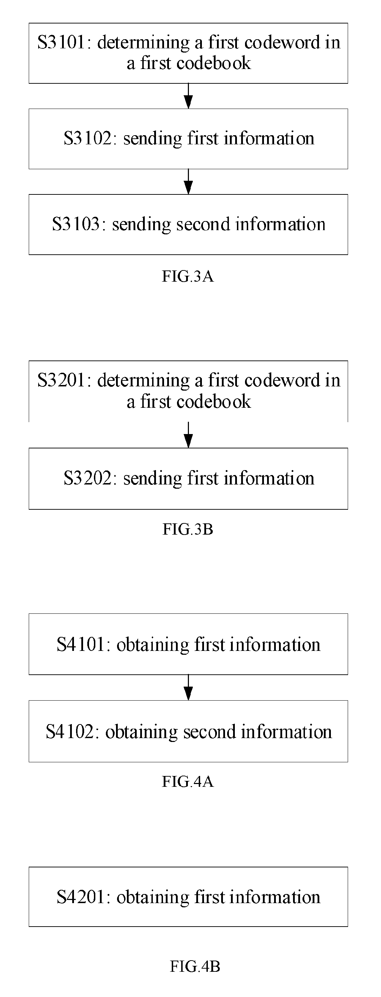

FIG. 3A is a schematic flowchart illustrating a communication method according to an embodiment of this disclosure. As shown in FIG. 3A, the embodiments of this disclosure relate to a communication method (the terminal side), which includes following steps.

Step S3101, a first codeword in a first codebook is determined.

Optional implementations of step S3101 can be found in the optional implementations of step S2101 in FIG. 2 and other related parts in the embodiments shown in FIG. 2, and will not be repeated here.

Step S3102, first information is sent.

Optional implementations of step S3102 can be found in the optional implementations of step S2102 in FIG. 2 and other related parts in the embodiments shown in FIG. 2, and will not be repeated here.

In some embodiments, the network device sends the first information to the terminal, but is not limited to this; it can also send the first information to other entities.

Step S3103, second information is sent.

Optional implementations of step S3102 can be found in the optional implementations of step S2102 in FIG. 2 and other related parts in the embodiments shown in FIG. 2, and will not be repeated here.

In some embodiments, the network device sends the first information to the terminal, but is not limited to this; it can also send the first information to other entities.

The communication method involved in the embodiments of this disclosure may include at least one of steps S3101 to S3103. For example, step S3101 may be implemented as a standalone embodiment, step S3102 may be implemented as a standalone embodiment, steps S3101 and S3103 may be implemented as a standalone embodiment, and steps S3102 and S3103 may be implemented as a standalone embodiment, but are not limited thereto.

In some embodiments, steps S3102 and S3103 may be interchanged or executed simultaneously.

In some embodiments, steps S3102 to S3103 are optional, and one or more of these steps may be omitted or substituted in different embodiments.

In some embodiments, steps S3101 and S3103 are optional, and one or more of these steps may be omitted or substituted in different embodiments.

FIG. 3B is a schematic flowchart of a communication method according to an embodiment of this disclosure. As shown in FIG. 3B, the embodiments of this disclosure relate to a communication method (the terminal side), which includes following steps.

Step S3201, a first codeword in a first codebook is determined.

Optional implementations of step S3201 can be found in step S2101 of FIG. 2, optional implementations of step S3101 of FIG. 3A, and other related parts in the embodiments involved in FIGS. 2 and 3A, which will not be repeated here.

Step S3202, first information is sent.

Optional implementations of step S3202 can be found in step S2101 of FIG. 2, optional implementations of step S3102 of FIG. 3A, and other related parts in the embodiments involved in FIGS. 2 and 3A, which will not be repeated here.

In some embodiments, a terminal determines a first codeword in a first codebook, the first codebook is constructed based on an angle parameter and a distance parameter, the first codebook is a codebook used by the terminal in a near-field region of a first antenna array, the first antenna array is an antenna array of the network device for transmitting wireless signals to the terminal;
the terminal sends first information to the network device, the first information indicates the angle parameter and the distance parameter corresponding to the first codeword.

In some embodiment, the first antenna array is any one of the following: a uniform linear array; a uniform planar array.

In some embodiment, the number of antenna ports of the first antenna array in a horizontal dimension is *N*₁, and the number of antenna ports of the first antenna array in a vertical dimension is *N*₂, wherein *N*₁ is greater than or equal to 1, and *N*₂ is greater than or equal to 1.

In some embodiment, the angle parameter includes at least one of the following: a first angle domain parameter of the near-field region in the horizontal dimension; a second angle domain parameter of the near-field region in the vertical dimension.

In some embodiment, a basis vector of the first codebook is the Kronecker product of a first basis vector in the horizontal dimension and a second basis vector in the vertical dimension; the ${n}_{1}^{′}$-th element ${ν}_{{n}_{1}^{′}}$ of the first basis vector *v* is: ${ν}_{{n}_{1}^{′}} = exp \left(j\frac{2 π}{λ}\left({n}_{1}{d}_{x} cosθsinφ-\frac{{n}_{1}^{2} {d}_{x}^{2} \left(1-{cos}^{2} {θsin}^{2} φ\right)}{2 r}\right)\right)$; the ${n}_{2}^{′}$-th element ${u}_{{n}_{2}^{′}}$ of the second basis vector *u* is: ${u}_{{n}_{2}^{′}} = exp \left(j\frac{2 π}{λ}\left({n}_{2}{d}_{z} cos φ-\frac{{n}_{2}^{2} {d}_{z}^{2} {sin}^{2} φ}{2 r}\right)\right)$; where, *n*₁ denotes an antenna port index in the horizontal dimension, *n*₂ denotes an antenna port index in the vertical dimension, ${n}_{1}^{′} = {n}_{1} + \left({N}_{1}+1\right) / 2 , {n}_{2}^{′} = {n}_{2} + \left({N}_{2}+1\right) / 2$; cos *θ* sin *φ* denotes a first angle domain parameter corresponding to the codeword in the first codebook, cos*φ* denotes a second angle domain parameter corresponding to the codeword in the first codebook, and *r* denotes the distance parameter corresponding to the codeword in the first codebook, -1≤ cos *φ* ≤1, -1≤ cos*θ*≤1, the distance parameter corresponding to the codeword in the first codebook satisfies at least one of the following: $0 < r \leq \frac{2 {D}_{x}^{2} {sin}^{2} θ}{λ} , 0 < r \leq \frac{2 {D}_{x}^{2} {sin}^{2} α}{λ}$ and $0 < r \leq \frac{2 {D}_{z}^{2} {sin}^{2} φ}{λ}$, where cos*α*=-cos*θ*sin*φ* ; *j* is an imaginary unit, *λ* denotes a wavelength of the wireless signal, *dₓ* denotes an antenna spacing of the first antenna array in the horizontal dimension, *Dₓ* denotes a length of the first antenna array in the horizontal dimension, *d_{z}* denotes an antenna spacing of the first antenna array in the vertical dimension, and *D_{z}* denotes a length of the first antenna array in the vertical dimension.

In some embodiment, the first information includes at least one of the following: first indication information, indicating a first angle domain parameter corresponding to the first codeword; second indication information, indicating a second angle domain parameter corresponding to the first codeword; third indication information, indicating the distance parameter corresponding to the first codeword.

In some embodiment, the angle parameter includes *N*₁*O*₁ angle sampling points obtained by quantizing a first angle domain parameter of the near-field region in the horizontal dimension, and/or *N*₂*O*₂ angle sampling points obtained by quantizing a second angle domain parameter of the near-field region in the vertical dimension; the distance parameter includes *N*₃*O*₃ distance sampling points obtained by quantizing a first distance domain parameter of the near-field region in the horizontal dimension, and/or *N*₄*O*₄ distance sampling points obtained by quantizing a second distance domain parameter of the near-field region in the vertical dimension; where, *N*₃ denotes the number of sampling points for the distance parameter in the horizontal dimension, *N*₄ denotes the number of sampling points for the distance parameter in the vertical dimension, *O*₁ denotes an oversampling factor of the angle parameter in the horizontal dimension, *O*₂ denotes an oversampling factor of the angle parameter in the vertical dimension, *O*₃ denotes an oversampling factor of the distance parameter in the horizontal dimension, and *O*₄ denotes an oversampling factor of the distance parameter in the vertical dimension.

In some embodiment, a basis vector of the first codebook is the Kronecker product of a first basis vector in the horizontal dimension and a second basis vector in the vertical dimension; the ${n}_{1}^{′}$ -th element ${ν}_{{n}_{1}^{′}}$ of the first basis vector *v* is: ${ν}_{{n}_{1}^{′}} = exp \left(j\frac{2 π}{λ}\left(\frac{2 {ln}_{1} {d}_{x}}{{N}_{1} {O}_{1}}-\frac{{n}_{1}^{2} {d}_{x}^{2} {λN}_{3}^{2} {O}_{3}^{2}}{4 {o}_{1}^{2} {D}_{x}^{2}}\right)\right)$; the ${n}_{2}^{′}$-th element ${u}_{{n}_{2}^{′}}$ of the second basis vector *u* is: ${u}_{{n}_{2}^{′}} = exp \left(j\frac{2 π}{λ}\left(\frac{2 {mn}_{2} {d}_{z}}{{N}_{2} {O}_{2}}-\frac{{n}_{2}^{2} {d}_{z}^{2} {λN}_{4}^{2} {O}_{4}^{2}}{4 {o}_{2}^{2} {D}_{z}^{2}}\right)\right)$; where, *n*₁ denotes an antenna port index in the horizontal dimension, *n*₂ denotes an antenna port index in the vertical dimension, ${n}_{1}^{′} = {n}_{1} + \left({N}_{1}+1\right) / 2 , {n}_{2}^{′} = {n}_{2} + \left({N}_{2}+1\right) / 2$; *l* denotes an angle sampling point index in the horizontal dimension corresponding to the codeword in the first codebook, *m* denotes an angle sampling point index in the vertical dimension corresponding to the codeword in the first codebook, *o*₁ denotes a distance sampling point index in the horizontal dimension corresponding to the codeword in the first codebook, *o*₂ denotes a distance sampling point index in the vertical dimension corresponding to the codeword in the first codebook, *l =* 0, 1,···, *N*₁*O*₁ *-* 1, *m =* 0, 1,···*, N*₂O₂ *-* 1, *o*₁ *=* 1, 2,···*, N*₃*O*₃, *o*₂ *=* 1, 2*,*···, *N*₄*O*₄; *j* is an imaginary unit, *λ* denotes a wavelength of the wireless signal, *dₓ* denotes an antenna spacing of the first antenna array in the horizontal dimension, *Dₓ* denotes a length of the first antenna array in the horizontal dimension, *d_{z}* denotes an antenna spacing of the first antenna array in the vertical dimension, and *D_{z}* denotes a length of the first antenna array in the vertical dimension.

In some embodiment, the antenna port index of the first antenna array satisfies the following condition: *n*₁ ∈ {-(*N*₁ *-*1)/2,*···*,0,*···*(*N*₁ -1)/2}; *n*₂ ∈{-(*N*₂ *-*1)/2,···*,*0,···(*N*₂ -1)/2}.

In some embodiment, an initial phase of the basis vector in the first codebook is zero; the ${n}_{1}^{′}$-th element ${ν}_{{n}_{1}^{′}}$ of the first basis vector v is: ${ν}_{{n}_{1}^{′}} = exp \left(j\frac{2 π}{λ}\left(\frac{2 {ln}_{1}^{′} {d}_{x}}{{N}_{1} {O}_{1}}-\frac{\left({\left({n}_{1}^{′}\right)}^{2}-{n}_{1}^{′}\left({N}_{1}+1\right)\right) {d}_{x}^{2} {λN}_{3}^{2} {O}_{3}^{2}}{4 {o}_{1}^{2} {D}_{x}^{2}}\right)\right)$; the ${n}_{2}^{′}$-th element ${u}_{{n}_{2}^{′}}$ of the second basis vector *u* is: ${u}_{{n}_{2}^{′}} = exp \left(j\frac{2 π}{λ}\left(\frac{2 {mn}_{2}^{′} {d}_{z}}{{N}_{2} {O}_{2}}-\frac{\left({\left({n}_{2}^{′}\right)}^{2}-{n}_{2}^{′}\left({N}_{2}+1\right)\right) {d}_{z}^{2} {λN}_{4}^{2} {O}_{4}^{2}}{4 {o}_{2}^{2} {D}_{z}^{2}}\right)\right)$.

In some embodiment, the antenna spacing in both the horizontal and vertical dimensions of the first antenna array is $\frac{λ}{2} , {D}_{x} = {N}_{1} \frac{λ}{2}$, and ${D}_{y} = {N}_{1} \frac{λ}{2}$; the ${n}_{1}^{′}$*-*th element ${ν}_{{n}_{1}^{′}}$ of the first basis vector v is: ${ν}_{{n}_{1}^{′}} = exp \left(\frac{j 2 {πln}_{1}^{′}}{{N}_{1} {O}_{1}}-\frac{jπ \left({\left({n}_{1}^{′}\right)}^{2}-{n}_{1}^{′}\left({N}_{1}+1\right)\right) {N}_{3}^{2} {O}_{3}^{2}}{2 {o}_{1}^{2} {N}_{1}^{2}}\right)$; the ${n}_{2}^{′}$-th element ${u}_{{n}_{2}^{′}}$ of the second basis vector *u* is: ${u}_{{n}_{2}^{′}} = exp \left(\frac{j 2 {πmn}_{2}^{′}}{{N}_{2} {O}_{2}}-\frac{jπ \left({\left({n}_{2}^{′}\right)}^{2}-{n}_{2}^{′}\left({N}_{2}+1\right)\right) {N}_{4}^{2} {O}_{4}^{2}}{2 {o}_{2}^{2} {N}_{2}^{2}}\right) .$

In some embodiment, the first information includes at least one of the following: a first indication field, indicating the angle sampling point index of the first codeword in the horizontal dimension; a second indication field, indicating the angle sampling point index of the first codeword in the vertical dimension; a third indication field, indicating the distance sampling point index of the first codeword in the horizontal dimension; a fourth indication field, indicating the distance sampling point index of the first codeword in the vertical dimension.

In some embodiment, the first indication field at least includes $\left⌈{log}_{2} {N}_{1}{O}_{1}\right⌉$ bits; the second indication field at least includes $\left⌈{log}_{2} {N}_{2}{O}_{2}\right⌉$ bits; the third indication field at least includes $\left⌈{log}_{2} {N}_{3}{O}_{3}\right⌉$ bits; the fourth indication field at least includes $\left⌈{log}_{2} {N}_{4}{O}_{4}\right⌉$ bits.

In some embodiment, the first codebook is used for single-polarization single-layer transmission; or, the first codebook is used for dual-polarization multi-layer transmission, the first codebook is constructed based on the angle parameter, the distance parameter, and a co-phase coefficient.

In some embodiment, the method further includes: sending, by the terminal, second information to the network device, wherein the second information indicates the co-phase coefficient corresponding to the first codeword.

In some embodiment, the co-phase coefficient includes at least one of: Binary Phase Shift Keying (BPSK), Quadruple Phase Shift Keying (QPSK), and Eight-Phase Phase Shift Keying (8-PSK).

FIG. 4A is a flowchart illustrating a communication method according to an embodiment of the present disclosure. As shown in FIG. 4A, the embodiment of the present disclosure relates to a communication method (the network device side), the method including following steps.

Step S4101, first information is obtained.

Optional implementations of step S4101 can be found in the optional implementations of step S2101 in FIG. 2, and other related parts in the embodiments involved in FIG. 2, which will not be repeated here.

In some embodiments, the network device receives the first information sent by the terminal, but is not limited to this; it may also receive the first information sent by other entities.

In some embodiments, the network device obtains the first information defined by a protocol.

In some embodiments, the network device obtains first information from the upper layer(s).

In some embodiments, the network device obtains the first information through processing.

Step S4102, second information is obtained.

Optional implementations of step S4101 can be found in the optional implementations of step S2101 in FIG. 2 and other related parts in the embodiments involved in FIG. 2, which will not be repeated here.

In some embodiments, the network device receives second information sent by a terminal, but is not limited thereto; it may also receive second information sent by other entities.

In some embodiments, the network device obtains second information as defined by a protocol.

In some embodiments, the network device obtains second information from the upper layer(s).

In some embodiments, the network device obtains the second information through processing.

In some embodiments, step S4102 is omitted, and the terminal autonomously implements the function indicated by the second information, or the above function is omitted or default.

The communication method involved in the embodiments of this disclosure may include at least one of steps S4101 to S4102. For example, step S4101 can be implemented as a standalone embodiment, and step S4102 can be implemented as a standalone embodiment, but are not limited thereto.

In some embodiments, steps S4101 and S4102 can be interchanged or performed simultaneously.

In some embodiments, step S4101 is optional, and one or more of these steps can be omitted or substituted in different embodiments.

In some embodiments, step S4102 is optional, and one or more of these steps can be omitted or substituted in different embodiments.

FIG. 4B is a flowchart illustrating a communication method according to an embodiment of the present disclosure. As shown in FIG. 4B, the embodiment of the present disclosure relates to a communication method (the network device side), which includes following steps.

Step S4201, first information is obtained.

Optional implementations of step S4201 can be found in step S2101 of FIG. 2, optional implementations of step S4101 of FIG. 4A, and other related parts in the embodiments involved in FIG. 2, which will not be repeated here.

In some embodiments, a network device receives first information sent by a terminal, wherein the first information indicates an angle parameter and a distance parameter corresponding to the first codeword, the first codeword is a codeword in the first codebook, the first codebook is constructed based on an angle parameter and a distance parameter, the first codebook is a codebook used by the terminal in a near-field region of a first antenna array, the first antenna array is an antenna array of the network device for transmitting wireless signals to the terminal.

In some embodiments, the first antenna array is any one of the following: a uniform linear array; a uniform planar array.

In some embodiments, the number of antenna ports of the first antenna array in a horizontal dimension is *N*₁, and the number of antenna ports of the first antenna array in a vertical dimension is *N*₂*,* wherein *N*₁ is greater than or equal to 1, and *N*₂ is greater than or equal to 1.

In some embodiments, the angle parameter includes at least one of the following: a first angle domain parameter of the near-field region in the horizontal dimension; a second angle domain parameter of the near-field region in the vertical dimension.

In some embodiments, a basis vector of the first codebook is the Kronecker product of a first basis vector in the horizontal dimension and a second basis vector in the vertical dimension; the ${n}_{1}^{′}$-th element ${ν}_{{n}_{1}^{′}}$ of the first basis vector v is: ${ν}_{{n}_{1}^{′}} = exp \left(j\frac{2 π}{λ}\left({n}_{1}{d}_{x} cosθsinφ-\frac{{n}_{1}^{2} {d}_{x}^{2} \left(1-{cos}^{2} {θsin}^{2} φ\right)}{2 r}\right)\right)$; the ${n}_{2}^{′}$-th element ${u}_{{n}_{2}^{′}}$ of the second basis vector *u* is: ${u}_{{n}_{2}^{′}} = exp \left(j\frac{2 π}{λ}\left({n}_{2}{d}_{z} cos φ-\frac{{n}_{2}^{2} {d}_{z}^{2} {sin}^{2} φ}{2 r}\right)\right)$; where, *n*₁ denotes an antenna port index in the horizontal dimension, *n*₂ denotes an antenna port index in the vertical dimension, ${n}_{1}^{′} = {n}_{1} + \left({N}_{1}+1\right) / 2 , {n}_{2}^{′} = {n}_{2} + \left({N}_{2}+1\right) / 2$; cos *θ* sin *φ* denotes a first angle domain parameter corresponding to the codeword in the first codebook, cos *φ* denotes a second angle domain parameter corresponding to the codeword in the first codebook, and *r* denotes the distance parameter corresponding to the codeword in the first codebook, *-*1 ≤ cos *φ ≤* 1, *-*1 ≤ cos *θ* ≤ 1, the distance parameter corresponding to the codeword in the first codebook satisfies at least one of the following: $0 < r \leq \frac{2 {D}_{x}^{2} {sin}^{2} θ}{λ} , 0 < r \leq \frac{2 {D}_{x}^{2} {sin}^{2} α}{λ}$ and $0 < r \leq \frac{2 {D}_{z}^{2} {sin}^{2} φ}{λ}$, where cos *α* = -cos *θ* sin *φ*; *j* is an imaginary unit, *λ* denotes a wavelength of the wireless signal, *dₓ* denotes an antenna spacing of the first antenna array in the horizontal dimension, *Dₓ* denotes a length of the first antenna array in the horizontal dimension, *d_{z}* denotes an antenna spacing of the first antenna array in the vertical dimension, and *D_{z}* denotes a length of the first antenna array in the vertical dimension.

In some embodiments, the first information includes at least one of the following: first indication information, indicating a first angle domain parameter corresponding to the first codeword; second indication information, indicating a second angle domain parameter corresponding to the first codeword; third indication information, indicating the distance parameter corresponding to the first codeword.

In some embodiments, the angle parameter includes *N*₁O₁ angle sampling points obtained by quantizing a first angle domain parameter of the near-field region in the horizontal dimension, and/or *N*₂*O*₂ angle sampling points obtained by quantizing a second angle domain parameter of the near-field region in the vertical dimension; the distance parameter includes *N*₃*O*₃ distance sampling points obtained by quantizing a first distance domain parameter of the near-field region in the horizontal dimension, and/or *N*₄*O*₄ distance sampling points obtained by quantizing a second distance domain parameter of the near-field region in the vertical dimension; where, *N*₃ denotes the number of sampling points for the distance parameter in the horizontal dimension, *N*₄ denotes the number of sampling points for the distance parameter in the vertical dimension, *O*₁ denotes an oversampling factor of the angle parameter in the horizontal dimension, *O*₂ denotes an oversampling factor of the angle parameter in the vertical dimension, *O*₃ denotes an oversampling factor of the distance parameter in the horizontal dimension, and *O*₄ denotes an oversampling factor of the distance parameter in the vertical dimension.

In some embodiments, the ${n}_{1}^{′}$-th element ${ν}_{{n}_{1}^{′}}$ of the first basis vector v is: ${ν}_{{n}_{1}^{′}} = exp \left(j\frac{2 π}{λ}\left(\frac{2 {ln}_{1} {d}_{x}}{{N}_{1} {O}_{1}}-\frac{{n}_{1}^{2} {d}_{x}^{2} {λN}_{3}^{2} {O}_{3}^{2}}{4 {o}_{1}^{2} {D}_{x}^{2}}\right)\right)$; the ${n}_{2}^{′}$-th element ${u}_{{n}_{2}^{′}}$ of the second basis vector *u* is: ${u}_{{n}_{2}^{′}} = exp \left(j\frac{2 π}{λ}\left(\frac{2 {mn}_{2} {d}_{z}}{{N}_{2} {O}_{2}}-\frac{{n}_{2}^{2} {d}_{z}^{2} {λN}_{4}^{2} {O}_{4}^{2}}{4 {o}_{2}^{2} {D}_{z}^{2}}\right)\right)$; where, *n*₁ denotes an antenna port index in the horizontal dimension, *n*₂ denotes an antenna port index in the vertical dimension, ${n}_{1}^{′} = {n}_{1} + \left({N}_{1}+1\right) / 2 , {n}_{2}^{′} = {n}_{2} + \left({N}_{2}+1\right) / 2$; *l* denotes an angle sampling point index in the horizontal dimension corresponding to the codeword in the first codebook, *m* denotes an angle sampling point index in the vertical dimension corresponding to the codeword in the first codebook, *o*₁ denotes a distance sampling point index in the horizontal dimension corresponding to the codeword in the first codebook, *o*₂ denotes a distance sampling point index in the vertical dimension corresponding to the codeword in the first codebook, *l =* 0, 1*,···, N*₁*O*₁ *-* 1, *m =* 0, 1,···*, N*₂*O₂ -* 1, *o*₁ = 1, 2,···, *N*₃*O*₃, *o*₂ *=* 1, 2,···*, N*₄*O*₄; *j* is an imaginary unit, *λ* denotes a wavelength of the wireless signal, *dₓ* denotes an antenna spacing of the first antenna array in the horizontal dimension, *Dₓ* denotes a length of the first antenna array in the horizontal dimension, *d_{z}* denotes an antenna spacing of the first antenna array in the vertical dimension, and *D_{z}* denotes a length of the first antenna array in the vertical dimension.

In some embodiments, the antenna port index of the first antenna array satisfies the following condition: *n*₁ ∈ {-(*N*₁ -1)/2,···,0,*···*(*N*₁ -1)/2}; *n*₂ ∈{-(*N*₂ *-*1)/2,*···,*0,*···*(*N*₂ -1)/2}.

In some embodiments, an initial phase of the basis vector in the first codebook is zero; the ${n}_{1}^{′}$-th element ${ν}_{{n}_{1}^{′}}$ of the first basis vector v is: ${ν}_{{n}_{1}^{′}} = exp \left(j\frac{2 π}{λ}\left(\frac{2 {ln}_{1}^{′} {d}_{x}}{{N}_{1} {O}_{1}}-\frac{\left({\left({n}_{1}^{′}\right)}^{2}-{n}_{1}^{′}\left({N}_{1}+1\right)\right) {d}_{x}^{2} {λN}_{3}^{2} {O}_{3}^{2}}{4 {o}_{1}^{2} {D}_{x}^{2}}\right)\right)$; the ${n}_{2}^{′}$-th element ${u}_{{n}_{2}^{′}}$ of the second basis vector *u* is: ${u}_{{n}_{2}^{′}} = exp \left(j\frac{2 π}{λ}\left(\frac{2 {mn}_{2}^{′} {d}_{z}}{{N}_{2} {O}_{2}}-\frac{\left({\left({n}_{2}^{′}\right)}^{2}-{n}_{2}^{′}\left({N}_{2}+1\right)\right) {d}_{z}^{2} {λN}_{4}^{2} {O}_{4}^{2}}{4 {o}_{2}^{2} {D}_{z}^{2}}\right)\right)$.

In some embodiments, the antenna spacing in both the horizontal and vertical dimensions of the first antenna array is $\frac{λ}{2} , {D}_{x} = {N}_{1} \frac{λ}{2}$, and ${D}_{y} = {N}_{1} \frac{λ}{2}$; the ${n}_{1}^{′}$*-*th element ${ν}_{{n}_{1}^{′}}$ of the first basis vector *v* is: ${ν}_{{n}_{1}^{′}} = exp \left(\frac{j 2 {πln}_{1}^{′}}{{N}_{1} {O}_{1}}-\frac{jπ \left({\left({n}_{1}^{′}\right)}^{2}-{n}_{1}^{′}\left({N}_{1}+1\right)\right) {N}_{3}^{2} {O}_{3}^{2}}{2 {o}_{1}^{2} {N}_{1}^{2}}\right)$; the ${n}_{2}^{′}$ -th element ${u}_{{n}_{2}^{′}}$ of the second basis vector *u* is: ${u}_{{n}_{2}^{′}} = exp \left(\frac{j 2 {πmn}_{2}^{′}}{{N}_{2} {O}_{2}}-\frac{jπ \left({\left({n}_{2}^{′}\right)}^{2}-{n}_{2}^{′}\left({N}_{2}+1\right)\right) {N}_{4}^{2} {O}_{4}^{2}}{2 {o}_{2}^{2} {N}_{2}^{2}}\right) .$

In some embodiments, the first information includes at least one of the following: a first indication field, indicating the angle sampling point index of the first codeword in the horizontal dimension; a second indication field, indicating the angle sampling point index of the first codeword in the vertical dimension; a third indication field, indicating the distance sampling point index of the first codeword in the horizontal dimension; a fourth indication field, indicating the distance sampling point index of the first codeword in the vertical dimension.

In some embodiments, the first indication field at least includes $\left⌈{log}_{2} {N}_{1}{O}_{1}\right⌉$ bits; the second indication field at least includes $\left⌈{log}_{2} {N}_{2}{O}_{2}\right⌉$ bits; the third indication field at least includes $\left⌈{log}_{2} {N}_{3}{O}_{3}\right⌉$ bits; the fourth indication field at least includes $\left⌈{log}_{2} {N}_{4}{O}_{4}\right⌉$ bits.

In some embodiments, the first codebook is used for single-polarization single-layer transmission; or, the first codebook is used for dual-polarization multi-layer transmission, wherein the first codebook is constructed based on the angle parameter, the distance parameter, and a co-phase coefficient.

In some embodiments, the method further includes: receiving, by the network device, second information sent by the terminal, wherein the second information indicates the co-phase coefficient corresponding to the first codeword.

In some embodiments, the co-phase coefficient includes at least one of: Binary Phase Shift Keying (BPSK), Quadruple Phase Shift Keying (QPSK), and Eight-Phase Phase Shift Keying (8-PSK).

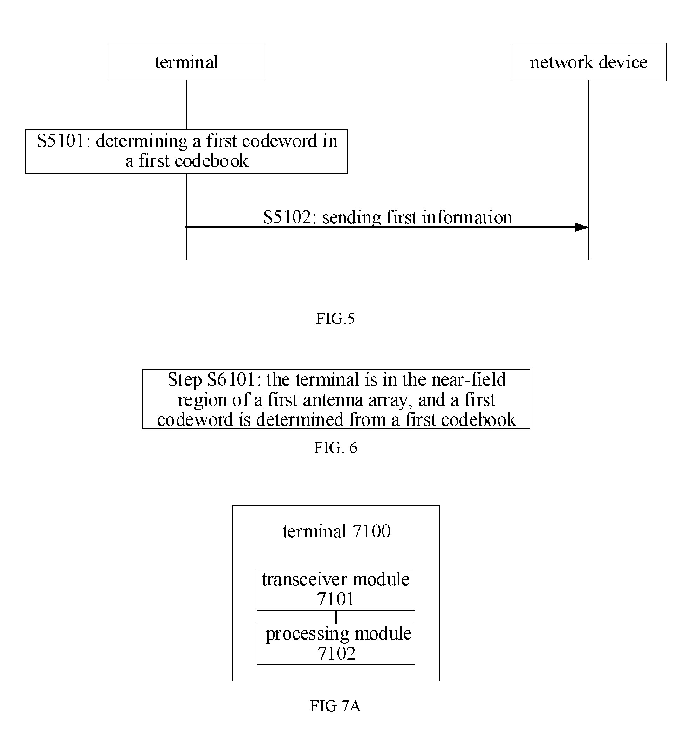

FIG. 5 is an interactive schematic diagram of a communication method according to an embodiment of the present disclosure. As shown in FIG. 5, the embodiment of the present disclosure relates to a communication method, which includes following steps.

Step S5101, the terminal determines a first codeword in a first codebook.

Optional implementations of step S5101 can be found in the optional implementations of step S2101 in FIG. 2, step S3101 in FIG. 3A, and step S3201 in FIG. 3B, as well as other related parts in the embodiments involved in FIGS. 2, 3A, 3B, 4A, and 4B, and will not be repeated here.

Step S5102, the terminal sends first information to the network device.

Optional implementations of step S5102 can be found in the optional implementations of steps S2102 in FIG. 2, S3102 in FIG. 3A, S3202 in FIG. 3B, S4101 in FIG. 4A, and S4201 in FIG. 4B, as well as other related parts in the embodiments involved in FIGS. 2, 3A, 3B, 4A, and 4B, which will not be repeated here.

In some embodiments, the above method may include the methods of the embodiments on the terminal side and the network device side, which will not be repeated here.

FIG. 6 is an interactive schematic diagram of a communication method according to an embodiment of this disclosure. As shown in FIG. 6, the embodiment of this disclosure relates to a communication method, which includes following steps.

Step S6101, the terminal is in the near-field region of a first antenna array, and a first codeword is determined from a first codebook.

In some embodiments, the first codebook is a codebook used by the terminal in the near-field region of the first antenna array, and the first antenna array is an antenna array used by the network device to transmit wireless signals to the terminal.

In some embodiments, the first antenna array is a uniform linear array.

For a uniform linear array, in some embodiments, the first codebook can be represented as a precoding vector v, the ${n}_{1}^{′}$-th element of the precoding vector v can be calculated as: ${ν}_{{n}_{1}^{′}} = exp \left(j\frac{2 π}{λ}\left({n}_{1}{d}_{x} cosθ-\frac{{n}_{1}^{2} {d}_{x}^{2} {sin}^{2} θ}{2 r}\right)\right)$; where ${n}_{1}^{′} = {n}_{1} + \left({N}_{1}+1\right) / 2$, i.e. ${n}_{1}^{′} = 1 , 2 , ⋯ , {N}_{1}$*.*

In some embodiments, to effectively reduce the feedback overhead of the precoding matrix, the angle domain cos *θ* and the distance domain *r* can be quantized respectively. Since -1 ≤ cos *θ* ≤ 1 and exp(*jπx*)=exp(*jπ*(*x*+2)), when $0 \leq \frac{2 l}{{N}_{1} {O}_{1}} \leq 1$, let $cos θ = \frac{2 l}{{N}_{1} {O}_{1}}$, when $1 < \frac{2 l}{{N}_{1} {O}_{1}} < 2$, let $cos θ = \frac{2 l}{{N}_{1} {O}_{1}} - 2$. Since $0 < r \leq \frac{2 {D}_{x}^{2} {sin}^{2} θ}{λ}$, we can let $r = \frac{2 {o}_{1}^{2} {D}_{x}^{2} {sin}^{2} θ}{{λN}_{3}^{2} {O}_{3}^{2}}$. Where *N*₁ and *N*₃ represent the number of sampling points in the horizontal dimension angle domain and the horizontal dimension distance domain, respectively, and *O*₁ and *O*₃ represent the oversampling factors in the horizontal dimension angle domain and the horizontal dimension distance domain, respectively, *l =* 0, 1,···, *N*₁*O*₁ *-* 1 and *o*₁ *=* 1, 2,···*, N*₃*O*₃*.*

In some embodiments, it can take ${d}_{x} = \frac{λ}{2}$, thus we can obtain $exp \left(j\frac{2 π}{λ}\left({n}_{1}{d}_{x} cosθ\right)\right) = exp \left(j\frac{2 π}{λ}\left({n}_{1}{d}_{x}\frac{2 l}{{N}_{1} {O}_{1}}\right)\right)$. Therefore, substituting the above formula into the precoding vector ${ν}_{{n}_{1}^{′}}$, we get: ${ν}_{{n}_{1}^{′}} = exp \left(j\frac{2 π}{λ}\left(\frac{2 {ln}_{1} {d}_{x}}{{N}_{1} {O}_{1}}-\frac{{n}_{1}^{2} {d}_{x}^{2} {λN}_{3}^{2} {O}_{3}^{2}}{4 {o}_{1}^{2} {D}_{x}^{2}}\right)\right)$;

Furthermore, since *n*₁ ∈ {-(*N*₁ - 1)/2,···,0,···(*N*₁ -1)/2} and ${n}_{1}^{′} = {n}_{1} + \left({N}_{1}+1\right) / 2$, and since the precoding vector ${ν}_{{n}_{1}^{′}}$ can set the initial phase to 0, terms unrelated to ${n}_{1}^{′}$ can be removed, i.e., the precoding vector ${ν}_{{n}_{1}^{′}}$ can be calculated as:
${ν}_{{n}_{1}^{′}} = exp \left(j\frac{2 π}{λ}\left(\frac{2 {ln}_{1}^{′} {d}_{x}}{{N}_{1} {O}_{1}}-\frac{\left({\left({n}_{1}^{′}\right)}^{2}-{n}_{1}^{′}\left({N}_{1}+1\right)\right) {d}_{x}^{2} {λN}_{3}^{2} {O}_{3}^{2}}{4 {o}_{1}^{2} {D}_{x}^{2}}\right)\right) .$

The precoding vectors v described above can be used for single-polarization, single-layer transmission. If dual-polarization, multi-layer transmission is considered, co-phase coefficients between polarization directions can be introduced, such as QPSK co-phase coefficients {1, -1, j, j}. Furthermore, the basis vectors described above are also applicable to codebook designs based on DL Type II.

For example, assuming the horizontal dimension antenna spacing of the antenna array is ${d}_{x} = \frac{λ}{2}$ and the horizontal dimension length of the antenna array is ${D}_{x} = {N}_{1} {d}_{x} = {N}_{1} \frac{λ}{2}$, the precoding vector ${ν}_{{n}_{1}^{′}}$ can be calculated as: ${ν}_{{n}_{1}^{′}} = exp \left(\frac{j 2 {πln}_{1}^{′}}{{N}_{1} {O}_{1}}-\frac{jπ \left({\left({n}_{1}^{′}\right)}^{2}-{n}_{1}^{′}\left({N}_{1}+1\right)\right) {N}_{3}^{2} {O}_{3}^{2}}{2 {o}_{1}^{2} {N}_{1}^{2}}\right)$. From the above equation, it can be seen that when considering the far-field MIMO channel model, the above precoding vector ${ν}_{{n}_{1}^{′}}$ degenerates into ${ν}_{{n}_{1}^{′}} = exp \left(\frac{j 2 {πln}_{1}^{′}}{{N}_{1} {O}_{1}}\right)$, which is consistent with the DL Type I codebook in related technologies.

In some embodiments, the first antenna array is a uniform linear array.

For a uniform array, in some embodiments, the first codebook can be designed as *v⊗u,* where the ${n}_{1}^{′}$-th element of the horizontal dimension precoding vector v and the ${n}_{2}^{′}$-th element of the vertical dimension precoding vector *u* can be calculated as: ${ν}_{{n}_{1}^{′}} = exp \left(j\frac{2 π}{λ}\left({n}_{1}{d}_{x} cosθsinφ-\frac{{n}_{1}^{2} {d}_{x}^{2} \left(1-{cos}^{2} {θsin}^{2} φ\right)}{2 r}\right)\right)$; ${u}_{{n}_{2}^{′}} = exp \left(j\frac{2 π}{λ}\left({n}_{2}{d}_{z} cos φ-\frac{{n}_{2}^{2} {d}_{z}^{2} {sin}^{2} φ}{2 r}\right)\right)$; where ${n}_{1}^{′} = {n}_{1} + \left({N}_{1}+1\right) / 2$ and ${n}_{2}^{′} = {n}_{2} + \left({N}_{2}+1\right) / 2$, that is, ${n}_{1}^{′} = 1 , 2 , ⋯ , {N}_{1}$ and ${n}_{2}^{′} = 1 , 2 , ⋯ , {N}_{2}$*.*

In some embodiments, to effectively reduce the feedback overhead of the precoding matrix, it is necessary to quantize the angle domain cos *θ* sin *φ* and cos *φ* and the distance domain *r* respectively. Since *-*1 ≤ cos *θ* sin *φ ≤* 1, -1 ≤ cos *φ* ≤ 1 and exp(*jπx*) = exp(*jπ*(*x*+2)), when $0 \leq \frac{2 l}{{N}_{1} {O}_{1}} \leq 1$, let $cos θ sin φ = \frac{2 l}{{N}_{1} {O}_{1}}$, when $1 < \frac{2 l}{{N}_{1} {O}_{1}} < 2$, let $cos θ sin φ = \frac{2 l}{{N}_{1} {O}_{1}} - 2$, when $0 \leq \frac{2 m}{{N}_{2} {O}_{2}} \leq 1$, let $cos φ = \frac{2 m}{{N}_{2} {O}_{2}}$, when $1 < \frac{2 m}{{N}_{2} {O}_{2}} < 2$, let $cos φ = \frac{2 m}{{N}_{2} {O}_{2}} - 2$. Since $0 < r \leq \frac{2 {D}_{x}^{2} {sin}^{2} α}{λ}$ in the horizontal dimension and $0 < r \leq \frac{2 {D}_{x}^{2} {sin}^{2} φ}{λ}$ in the vertical dimension, let $r = \frac{2 {o}_{1}^{2} {D}_{x}^{2} {sin}^{2} α}{{λN}_{3}^{2} {O}_{3}^{2}}$ and $r = \frac{2 {o}_{2}^{2} {D}_{z}^{2} {sin}^{2} φ}{{λN}_{4}^{2} {O}_{4}^{2}}$, where sin² *α* = 1 - cos² *θ* sin² *φ.* Where *N*₁, *N*₂*, N*₃ and *N*₄ represent the number of sampling points in the horizontal dimension angle domain, vertical dimension angle domain, horizontal dimension distance domain, and vertical dimension distance domain, respectively; O₁, *O*₂, *O*₃ and *O*₄ represent the oversampling factors in the horizontal dimension angle domain, vertical dimension angle domain, horizontal dimension distance domain, and vertical dimension distance domain, respectively; *l =* 0, 1, *···, N*₁*O*₁ *-* 1*, m =* 0, 1,···, *N₂O*₂ *-* 1, *o*₁ = 1, 2,···, *N*₃*O*₃ and *o*₂ = 1, 2,···*, N*₄*O*₄.

In some embodiments, it can take ${d}_{x} = {d}_{y} = \frac{λ}{2}$, thus we can obtain $exp \left(j\frac{2 π}{λ}\left({n}_{1}{d}_{x} cosθsinφ\right)\right) = exp \left(j\frac{2 π}{λ}\left({n}_{1}{d}_{x}\frac{2 l}{{N}_{1} {O}_{1}}\right)\right)$ and $exp \left(j\frac{2 π}{λ}\left({n}_{2}{d}_{z} cosφ\right)\right) = exp \left(j\frac{2 π}{λ}\left({n}_{2}{d}_{z}\frac{2 m}{{N}_{2} {O}_{2}}\right)\right)$. Therefore, substituting the above formula into the precoding vector yields: ${ν}_{{n}_{1}^{′}} = exp \left(j\frac{2 π}{λ}\left(\frac{2 {ln}_{1} {d}_{x}}{{N}_{1} {O}_{1}}-\frac{{n}_{1}^{2} {d}_{x}^{2} {λN}_{3}^{2} {O}_{3}^{2}}{4 {o}_{1}^{2} {D}_{x}^{2}}\right)\right)$; ${u}_{{n}_{2}^{′}} = exp \left(j\frac{2 π}{λ}\left(\frac{2 {ln}_{2} {d}_{z}}{{N}_{2} {O}_{2}}-\frac{{n}_{2}^{2} {d}_{z}^{2} {λN}_{4}^{2} {O}_{4}^{2}}{4 {o}_{2}^{2} {D}_{z}^{2}}\right)\right)$*.*

Furthermore, since *n*₁ ∈ {-(*N*₁ *-*1)/2,···, 0,···(*N*₁ -1)/2} and *n*₂ ∈ {*-*(*N*₂ -1)/2,···,0,···(*N*₂ -1)/2}, and ${n}_{1}^{′} = {n}_{1} + \left({N}_{1}+1\right) / 2$ and ${n}_{2}^{′} = {n}_{2} + \left({N}_{2}+1\right) / 2$, and since the precoding vector can set the initial phase to 0, terms unrelated to ${n}_{1}^{′}$ and ${n}_{2}^{′}$ can be removed, i.e., the precoding vector can be expressed as: ${ν}_{{n}_{1}^{′}} = exp \left(j\frac{2 π}{λ}\left(\frac{2 {ln}_{1}^{′} {d}_{x}}{{N}_{1} {O}_{1}}-\frac{\left({\left({n}_{1}^{′}\right)}^{2}-{n}_{1}^{′}\left({N}_{1}+1\right)\right) {d}_{x}^{2} {λN}_{3}^{2} {O}_{3}^{2}}{4 {o}_{1}^{2} {D}_{x}^{2}}\right)\right) ;$ ${u}_{{n}_{2}^{′}} = exp \left(j\frac{2 π}{λ}\left(\frac{2 {mn}_{2}^{′} {d}_{z}}{{N}_{2} {O}_{2}}-\frac{\left({\left({n}_{2}^{′}\right)}^{2}-{n}_{2}^{′}\left({N}_{2}+1\right)\right) {d}_{z}^{2} {λN}_{4}^{2} {O}_{4}^{2}}{4 {o}_{2}^{2} {D}_{z}^{2}}\right)\right) .$

Optionally, the above precoding vector can be used for single-polarization single-layer transmission. If dual-polarization multi-layer transmission is considered, co-phase coefficients between polarization directions can be introduced, such as QPSK co-phase coefficients {1,-1,j,-j}, etc. Moreover, the above basis vectors are also applicable to codebook designs based on DL Type II.

For example, assuming the antenna spacing in both the horizontal and vertical dimensions of the antenna array is ${d}_{x} = {d}_{z} = \frac{λ}{2}$, and the lengths in the horizontal and vertical dimensions of the antenna array are ${D}_{x} = {N}_{1} {d}_{x} = {N}_{1} \frac{λ}{2}$ and ${D}_{z} = {N}_{2} {d}_{z} = {N}_{2} \frac{λ}{2}$ respectively, then the precoding vectors *v* and *u* can be calculated as: ${ν}_{{n}_{1}^{′}} = exp \left(\frac{j 2 {πln}_{1}^{′}}{{N}_{1} {O}_{1}}-\frac{jπ \left({\left({n}_{1}^{′}\right)}^{2}-{n}_{1}^{′}\left({N}_{1}+1\right)\right) {N}_{3}^{2} {O}_{3}^{2}}{2 {o}_{1}^{2} {N}_{1}^{2}}\right)$; ${u}_{{n}_{2}^{′}} = exp \left(\frac{j 2 {πmn}_{2}^{′}}{{N}_{2} {O}_{2}}-\frac{jπ \left({\left({n}_{2}^{′}\right)}^{2}-{n}_{2}^{′}\left({N}_{2}+1\right)\right) {N}_{4}^{2} {O}_{4}^{2}}{2 {o}_{2}^{2} {N}_{2}^{2}}\right)$.

From the above equations, it can be seen that when considering the far-field MIMO channel model, the above precoding vectors degenerate into ${ν}_{{n}_{1}^{′}} = exp \left(\frac{j 2 {πln}_{1}^{′}}{{N}_{1} {O}_{1}}\right)$ and ${u}_{{n}_{2}^{′}} = exp \left(\frac{j 2 {πmn}_{2}^{′}}{{N}_{2} {O}_{2}}\right)$, consistent with the DL Type I codebook in related technologies.

In some embodiments, the terminal feeds back the first codebook and/or the first codeword to the network device. Optionally, the terminal can indicate different feedback parameters through the following information fields:
by $\left⌈{log}_{2} {N}_{1}{O}_{1}\right⌉$ indicating *l =* 0,*···N*₁*O*₁ *-*1, wideband or subband feedback is adopted;
by $\left⌈{log}_{2} {N}_{2}{O}_{2}\right⌉$ indicating *m =* 0,···*N*₂*O*₂ *-*1, wideband or subband feedback is adopted;
by $\left⌈{log}_{2} {N}_{3}{O}_{3}\right⌉$ indicating *o*₁ = 1,···*N*₃*O*₃ or *o*₁ = 1,···*N*₃*O*₃, wideband or subband feedback is adopted;
by $\left⌈{log}_{2} {N}_{4}{O}_{4}\right⌉$ indicating *o*₂ *=* 1,···*N*₄*O*₄ *-*1 or *o*₂ *=* 1*,···N*₄*O*₄, wideband or subband feedback is adopted;
by 1 or 2 or 3 bits indicating *i*₂, corresponding to the BPSK, QPSK and 8-PSK co-phase coefficients respectively, wideband or subband feedback is adopted.

In the embodiments of this disclosure, some or all steps, and their optional implementations, can be arbitrarily combined with some or all steps in other embodiments, or arbitrarily combined with optional implementations in other embodiments.

The embodiments of this disclosure also provide an apparatus for implementing any of the above methods. For example, an apparatus is provided, including units or modules for implementing the steps performed by the terminal in any of the above methods. Furthermore, another apparatus is provided, including units or modules for implementing the steps performed by network devices (e.g., access network devices, core network functional nodes, core network devices, terminals, network devices, etc.) in any of the above methods.

It should be understood that the above division of units or modules in the apparatus is only a logical functional division; in actual implementation, they can be fully or partially integrated into a single physical entity, or they can be physically separated. Furthermore, the units or modules in the apparatus can be implemented in the form of a processor invoking software, for example, the apparatus includes a processor connected to a memory having instructions stored thereon, and the processor invokes the instructions stored in the memory to implement any of the above methods or to implement the functions of the above units or modules in the apparatus. The processor is, for example, a general-purpose processor, such as a Central Processing Unit (CPU) or a microprocessor, and the memory is either internal or external to the apparatus. Alternatively, the units or modules in the device can be implemented in the form of hardware circuits. The functions of some or all of the units or modules can be implemented through the design of the hardware circuits, which can be understood as one or more processors. For example, in one implementation, the hardware circuit is an application-specific integrated circuit (ASIC), and the functions of some or all of the units or modules are implemented through the design of the logical relationships between the components within the circuit. For another example, in another implementation, the hardware circuit can be implemented using a programmable logic device (PLD), such as a Field Programmable Gate Array (FPGA), which can include a large number of logic gates. The connection relationships between the logic gates are configured through a configuration file, thereby implementing the functions of some or all of the units or modules. All units or modules of the above apparatuses can be implemented entirely through the processor invoking software, or entirely through hardware circuits, or partially through the processor invoking software and the remaining through hardware circuits.

In embodiments of this disclosure, the processor is a circuit with signal processing capabilities. In one implementation, the processor can be a circuit with instruction reading and execution capabilities, such as a Central Processing Unit (CPU), a microprocessor, a graphics processing unit (GPU) (which can be understood as a microprocessor), or a digital signal processor (DSP). In another implementation, the processor can implement certain functions through the logical relationships of hardware circuits. The logical relationships of the hardware circuits are fixed or reconfigurable. For example, the processor is a hardware circuit implemented using an application-specific integrated circuit (ASIC) or a programmable logic device (PLD), such as an FPGA. In a reconfigurable hardware circuit, the process of the processor loading a configuration document and configuring the hardware circuit can be understood as the process of the processor loading instructions to implement the functions of some or all of the above-mentioned units or modules. Furthermore, it can also be a hardware circuit designed for artificial intelligence, which can be understood as an ASIC, such as a Neural Network Processing Unit (NPU), a Tensor Processing Unit (TPU), or a Deep Learning Processing Unit (DPU).

FIG. 7A is a schematic diagram of the terminal structure according to an embodiment of this disclosure. As shown in FIG. 7A, the terminal 7100 may include at least one of a transceiver module 7101 and a processing module 7102. In some embodiments, the processing module 7102 is configured to determine a first codeword in a first codebook, wherein the first codebook is constructed based on an angle parameter and a distance parameter, the first codebook is a codebook used by the terminal in a near-field region of a first antenna array, the first antenna array is an antenna array of the network device for transmitting wireless signals to the terminal; the above transceiver module 7101 is configured to send first information to the network device, wherein the first information indicates the angle parameter and the distance parameter corresponding to the first codeword. Optionally, the transceiver module 7101 is used to perform at least one of the communication steps, such as sending and/or receiving (e.g., steps S2102, S2103, but not limited thereto) performed by the terminal in any of the above methods, which will not be elaborated here. Optionally, the processing module 7102 is used to perform at least one of the other steps (e.g., step S2101) performed by the terminal in any of the above methods, which will not be elaborated here.

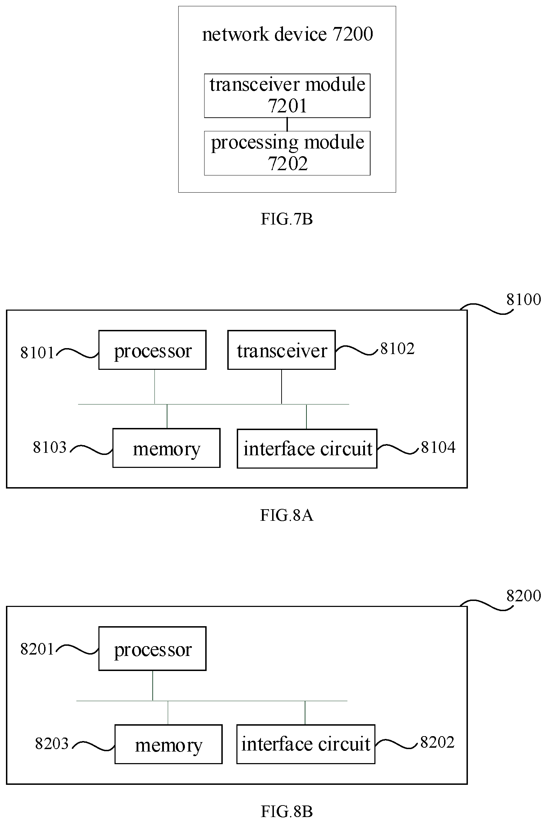

FIG. 7B is a schematic diagram of the network device according to an embodiment of this disclosure. As shown in FIG. 7B, the network device 7200 may include at least one of a transceiver module 7201 and a processing module 7202. In some embodiments, the transceiver module 7201 is configured to receive first information sent by a terminal, wherein the first information indicates an angle parameter and a distance parameter corresponding to the first codeword, the first codeword is a codeword in the first codebook, the first codebook is constructed based on an angle parameter and a distance parameter, the first codebook is a codebook used by the terminal in a near-field region of a first antenna array, the first antenna array is an antenna array of the network device for transmitting wireless signals to the terminal. Optionally, the above transceiver module 7201 is used to perform at least one of the communication steps, such as sending and/or receiving (e.g., steps S2102, S2103, but not limited thereto) performed by the network device in any of the above methods, which will not be elaborated here. Optionally, the processing module 7202 is used to perform at least one of the other steps performed by the network device in any of the above methods, which will not be elaborated here.

In some embodiments, the transceiver module may include a transmitting module and/or a receiving module, which may be separate or integrated. Optionally, the transceiver module may be interchangeable with a transceiver.

In some embodiments, the processing module may be a single module or may include multiple sub-modules. Optionally, the multiple sub-modules may each execute all or part of the steps required by the processing module. Optionally, the processing module may be interchangeable with a processor.

FIG. 8A is a schematic structural diagram of the communication device 8100 according to an embodiment of this disclosure. The communication device 8100 can be a first communication device or a second communication device. The first and second communication devices can be network devices (e.g., access network devices, core network devices, etc.), terminals (e.g., user equipment, etc.), chips, chip systems, or processors that support network devices in implementing any of the above methods, or chips, chip systems, or processors that support terminals in implementing any of the above methods. The communication device 8100 can be used to implement the methods described in the above method embodiments, and specific details can be found in the descriptions of the above method embodiments.

As shown in FIG. 8A, the communication device 8100 includes one or more processors 8101. The processor 8101 can be a general-purpose processor or a dedicated processor, such as a baseband processor or a central processor. The baseband processor can be used to process communication protocols and communication data, and the central processor can be used to control communication apparatuses (e.g., base stations, baseband chips, terminal devices, terminal device chips, DUs or CUs, etc.), execute programs, and process program data. Optionally, the communication device 8100 is used to execute any of the above methods. Optionally, one or more processors 8101 are used to invoke instructions to cause the communication device 8100 to execute any of the above methods.

In some embodiments, the communication device 8100 further includes one or more transceivers 8102. When the communication device 8100 includes one or more transceivers 8102, the transceiver 8102 performs at least one of the communication steps, such as sending and/or receiving, in the above method, for example, steps S2102, S2103, but not limited thereto. The processor 8101 performs at least one of the other steps, such as step S2101, but not limited thereto. In optional embodiments, a transceiver may include a receiver and/or a transmitter, which may be separate or integrated. Optionally, the terms transceiver, transceiver unit, transceiver machine, and transceiver circuit can be used interchangeably; the terms transmitter, transmitting unit, transmitter machine, transmitting circuit, interface circuit and interface can be used interchangeably; and the terms receiver, receiving unit, receiver machine, and receiving circuit can be used interchangeably.

In some embodiments, the communication device 8100 further includes one or more memories 8103 for storing data. Optionally, all or part of the memories 8103 may be located outside the communication device 8100. In optional embodiments, the communication device 8100 may include one or more interface circuits 8104. Optionally, the interface circuit 8104 is connected to the memory 8102 and can be used to receive data from the memory 8102 or other apparatuses, and to send data to the memory 8102 or other apparatuses. For example, the interface circuit 8104 can read data stored in the memory 8102 and send the data to the processor 8101.

The communication device 8100 described in the above embodiments may be the network device or UE, but the scope of the communication device 8100 described in this disclosure is not limited thereto, and the structure of the communication device 8100 may not be limited to FIG. 8A. The terminal may be a standalone device or may be part of a large device. For example, the terminal may be: (1) a standalone integrated circuit (IC), or a chip, or a chip system or a subsystem; (2) a collection of one or more ICs, optionally including storage components for storing data and programs; (3) an ASIC, such as a modem; (4) a module that can be embedded in other devices; (5) a receiver, a terminal device, a smart terminal device, a cellular phone, a wireless device, a handheld device, a mobile unit, a vehicle-mounted device, a network device, a cloud device, an artificial intelligence device, etc.; (6) others, etc.

FIG. 8B is a schematic diagram of the structure of chip 8200 according to an embodiment of this disclosure. For the case that the communication device 8100 can be a chip or a chip system, it can refer to the structural schematic diagram of the chip 8200 shown in FIG. 8B, but it is not limited to this.

The chip 8200 includes one or more processors 8201. The chip 8200 is used to perform any of the above methods.

In some embodiments, the chip 8200 further includes one or more interface circuits 8202. Optionally, terms such as interface circuit, interface, and transceiver pin can be used interchangeably. In some embodiments, the chip 8200 further includes one or more memories 8203 for storing data. Optionally, all or part of the memories 8203 may be located outside chip 8200. Optionally, the interface circuit 8202 is connected to the memory 8203. The interface circuit 8202 can be used to receive data from the memory 8203 or other apparatuses, and can also be used to send data to the memory 8203 or other apparatuses. For example, the interface circuit 8202 can read instructions stored in the memory 8203 and send these data to the processor 8201.

In some embodiments, the interface circuit 8202 performs at least one of the communication steps, such as sending and/or receiving, in the above method, for example, step S2102, step S2103, but not limited thereto. The interface circuit 8202 performing the communication steps such as sending and/or receiving in the above methods refers to, for example, the interface circuit 8202 performing data interaction between the processor 8201, the chip 8200, the memory 8203, or the transceiver device. In some embodiments, the processor 8201 performs at least one of other steps (e.g., step S2101, but not limited thereto).

The modules and/or devices described in the various embodiments, such as virtual devices, physical devices, and chips, can be arbitrarily combined or separated as appropriate. Optionally, some or all of the steps can also be performed collaboratively by multiple modules and/or devices, without limitation herein.

This disclosure also provides a storage medium storing instructions that, when executed on a communication device 8100, cause the communication device 8100 to perform any of the above methods. Optionally, the storage medium is an electronic storage medium. Optionally, the storage medium is a computer-readable storage medium, but not limited thereto; it may also be a storage medium readable by other apparatuses. Optionally, the storage medium may be a non-transitory storage medium, but not limited thereto; it may also be a transitory storage medium.

This disclosure also provides a program product that, when executed by the communication device 8100, causes the communication device 8100 to perform any of the above methods. Optionally, the program product is a computer program product.

This disclosure also provides a computer program that, when executed on a computer, causes the computer to perform any of the above methods.

## Claims

1. A communication method, comprising:
determining, by a terminal, a first codeword in a first codebook, wherein the first codebook is constructed based on an angle parameter and a distance parameter, the first codebook is a codebook used by the terminal in a near-field region of a first antenna array, and the first antenna array is an antenna array of the network device for transmitting wireless signals to the terminal; and
sending, by the terminal, first information to the network device, wherein the first information indicates the angle parameter and the distance parameter corresponding to the first codeword.

2. The method according to claim 1, wherein the first antenna array is any one of the following: a uniform linear array; a uniform planar array.

3. The method according to claim 1 or 2, wherein the number of antenna ports of the first antenna array in a horizontal dimension is *N*₁, and the number of antenna ports of the first antenna array in a vertical dimension is *N*₂*,* wherein *N*₁ is greater than or equal to 1, and *N*₂ is greater than or equal to 1.

4. The method according to claim 3, wherein the angle parameter comprises at least one of the following: a first angle domain parameter of the near-field region in the horizontal dimension; a second angle domain parameter of the near-field region in the vertical dimension.

5. The method according to claim 4, wherein a basis vector of the first codebook is the Kronecker product of a first basis vector in the horizontal dimension and a second basis vector in the vertical dimension;
the ${n}_{1}^{′}$-th element ${ν}_{{n}_{1}^{′}}$ of the first basis vector v is: ${ν}_{{n}_{1}^{′}} = exp \left(j\frac{2 π}{λ}\left({n}_{1}{d}_{x} cosθsinφ-\frac{{n}_{1}^{2} {d}_{x}^{2} \left(1-{cos}^{2} {θsin}^{2} φ\right)}{2 r}\right)\right) ;$
the ${n}_{2}^{′}$*-*th element ${u}_{{n}_{2}^{′}}$ of the second basis vector *u* is: ${u}_{{n}_{2}^{′}} = exp \left(j\frac{2 π}{λ}\left({n}_{2}{d}_{z} cos φ-\frac{{n}_{2}^{2} {d}_{z}^{2} {sin}^{2} φ}{2 r}\right)\right) ;$
where, *n*₁ denotes an antenna port index in the horizontal dimension, *n*₂ denotes an antenna port index in the vertical dimension, ${n}_{2}^{′} = {n}_{2} + \left({N}_{2}+1\right) / 2$;
cos *θ* sin *φ* denotes a first angle domain parameter corresponding to the codeword in the first codebook, cos *φ* denotes a second angle domain parameter corresponding to the codeword in the first codebook, and *r* denotes the distance parameter corresponding to the codeword in the first codebook, -1 ≤ cos *φ* ≤ 1, -1 ≤ cos *θ* ≤ 1, the distance parameter corresponding to the codeword in the first codebook satisfies at least one of the following: $0 < r \leq \frac{2 {D}_{x}^{2} {sin}^{2} θ}{λ} , 0 < r \leq \frac{2 {D}_{x}^{2} {sin}^{2} α}{λ}$ and $0 < r \leq \frac{2 {D}_{z}^{2} {sin}^{2} φ}{λ}$, where cos *α* = -cos*θ* sin *φ* ;
j is an imaginary unit, *λ* denotes a wavelength of the wireless signal, *dₓ* denotes an antenna spacing of the first antenna array in the horizontal dimension, *Dₓ* denotes a length of the first antenna array in the horizontal dimension, *d_{z}* denotes an antenna spacing of the first antenna array in the vertical dimension, and *D_{z}* denotes a length of the first antenna array in the vertical dimension.

6. The method according to any one of claims 4-5, wherein the first information comprises at least one of the following:
first indication information, indicating a first angle domain parameter corresponding to the first codeword;
second indication information, indicating a second angle domain parameter corresponding to the first codeword;
third indication information, indicating the distance parameter corresponding to the first codeword.

7. The method according to claim 3, wherein the angle parameter comprises *N*₁O₁ angle sampling points obtained by quantizing a first angle domain parameter of the near-field region in the horizontal dimension, and/or *N*₂*O*₂ angle sampling points obtained by quantizing a second angle domain parameter of the near-field region in the vertical dimension;
the distance parameter comprises *N*₃*O*₃ distance sampling points obtained by quantizing a first distance domain parameter of the near-field region in the horizontal dimension, and/or *N*₄*O*₄ distance sampling points obtained by quantizing a second distance domain parameter of the near-field region in the vertical dimension;
where, *N*₃ denotes the number of sampling points for the distance parameter in the horizontal dimension, *N*₄ denotes the number of sampling points for the distance parameter in the vertical dimension, *O*₁ denotes an oversampling factor of the angle parameter in the horizontal dimension, O₂ denotes an oversampling factor of the angle parameter in the vertical dimension, *O*₃ denotes an oversampling factor of the distance parameter in the horizontal dimension, and *O*₄ denotes an oversampling factor of the distance parameter in the vertical dimension.

8. The method according to claim 7, wherein a basis vector of the first codebook is the Kronecker product of a first basis vector in the horizontal dimension and a second basis vector in the vertical dimension;
the ${n}_{1}^{′}$-th element ${ν}_{{n}_{1}^{′}}$ of the first basis vector v is: ${ν}_{{n}_{1}^{′}} = exp \left(j\frac{2 π}{λ}\left(\frac{2 {ln}_{1} {d}_{x}}{{N}_{1} {O}_{1}}-\frac{{n}_{1}^{2} {d}_{x}^{2} {λN}_{3}^{2} {O}_{3}^{2}}{4 {o}_{1}^{2} {D}_{x}^{2}}\right)\right) ;$
the ${n}_{2}^{′}$*-*th element ${u}_{{n}_{2}^{′}}$ of the second basis vector *u* is: ${u}_{{n}_{2}^{′}} = exp \left(j\frac{2 π}{λ}\left(\frac{2 {mn}_{2} {d}_{z}}{{N}_{2} {O}_{2}}-\frac{{n}_{2}^{2} {d}_{z}^{2} {λN}_{4}^{2} {O}_{4}^{2}}{4 {o}_{2}^{2} {D}_{z}^{2}}\right)\right) ;$
where, *n*₁ denotes an antenna port index in the horizontal dimension, *n*₂ denotes an antenna port index in the vertical dimension, ${n}_{1}^{′} = {n}_{1} + \left({N}_{1}+1\right) / 2 , {n}_{2}^{′} = {n}_{2} + \left({N}_{2}+1\right) / 2$;
*l* denotes an angle sampling point index in the horizontal dimension corresponding to the codeword in the first codebook, *m* denotes an angle sampling point index in the vertical dimension corresponding to the codeword in the first codebook, *o*₁ denotes a distance sampling point index in the horizontal dimension corresponding to the codeword in the first codebook, *o*₂ denotes a distance sampling point index in the vertical dimension corresponding to the codeword in the first codebook, *l =* 0,1,···, *N*₁*O*₁ *-* 1, *m =* 0,1,···*, N*₂*O*₂ *-* 1, *o*₁ = 1, 2,···, *N*₃*O*₃, *o*₂ *=* 1, 2,···*, N*₄*O*₄;
j is an imaginary unit, *λ* denotes a wavelength of the wireless signal, *dₓ* denotes an antenna spacing of the first antenna array in the horizontal dimension, *Dₓ* denotes a length of the first antenna array in the horizontal dimension, *d_{z}* denotes an antenna spacing of the first antenna array in the vertical dimension, and *D_{z}* denotes a length of the first antenna array in the vertical dimension.

9. The method according to claim 8, wherein the antenna port index of the first antenna array satisfies the following condition: ${n}_{1} ∈ \left\{-\left({N}_{1}-1\right)/2,⋯,0,⋯\left({N}_{1}-1\right)/2\right\} ; {n}_{2} ∈ \left\{-\left({N}_{2}-1\right)/2,⋯,0,⋯\left({N}_{2}-1\right)/2\right\} .$

10. The method according to claim 9, wherein an initial phase of the basis vector is zero;
the ${n}_{1}^{′}$-th element ${ν}_{{n}_{1}^{′}}$ of the first basis vector v is: ${ν}_{{n}_{1}^{′}} = exp \left(j\frac{2 π}{λ}\left(\frac{2 {ln}_{1}^{′} {d}_{x}}{{N}_{1} {O}_{1}}-\frac{\left({\left({n}_{1}^{′}\right)}^{2}-{n}_{1}^{′}\left({N}_{1}+1\right)\right) {d}_{x}^{2} {λN}_{3}^{2} {O}_{3}^{2}}{4 {o}_{1}^{2} {D}_{x}^{2}}\right)\right) ;$
the ${n}_{2}^{′}$*-*th element ${u}_{{n}_{2}^{′}}$ of the second basis vector *u* is: ${u}_{{n}_{2}^{′}} = exp \left(j\frac{2 π}{λ}\left(\frac{2 {mn}_{2}^{′} {d}_{z}}{{N}_{2} {O}_{2}}-\frac{\left({\left({n}_{2}^{′}\right)}^{2}-{n}_{2}^{′}\left({N}_{2}+1\right)\right) {d}_{z}^{2} {λN}_{4}^{2} {O}_{4}^{2}}{4 {o}_{2}^{2} {D}_{z}^{2}}\right)\right) .$

11. The method according to claim 10, wherein the antenna spacing in both the horizontal and vertical dimensions of the first antenna array is $\frac{λ}{2} , {D}_{x} = {N}_{1} \frac{λ}{2}$, and ${D}_{y} = {N}_{1} \frac{λ}{2}$;
the ${n}_{1}^{′}$-th element ${ν}_{{n}_{1}^{′}}$ of the first basis vector v is: ${ν}_{{n}_{1}^{′}} = exp \left(\frac{j 2 {πln}_{1}^{′}}{{N}_{1} {O}_{1}}-\frac{jπ \left({\left({n}_{1}^{′}\right)}^{2}-{n}_{1}^{′}\left({N}_{1}+1\right)\right) {N}_{3}^{2} {O}_{3}^{2}}{2 {o}_{1}^{2} {N}_{1}^{2}}\right) ;$
the ${n}_{2}^{′}$*-*th element ${u}_{{n}_{2}^{′}}$ of the second basis vector *u* is: ${u}_{{n}_{2}^{′}} = exp \left(\frac{j 2 {πmn}_{2}^{′}}{{N}_{2} {O}_{2}}-\frac{jπ \left({\left({n}_{2}^{′}\right)}^{2}-{n}_{2}^{′}\left({N}_{2}+1\right)\right) {N}_{4}^{2} {O}_{4}^{2}}{2 {o}_{2}^{2} {N}_{2}^{2}}\right) .$

12. The method according to any one of claims 8-11, wherein the first information comprises at least one of the following:
a first indication field, indicating the angle sampling point index of the first codeword in the horizontal dimension;
a second indication field, indicating the angle sampling point index of the first codeword in the vertical dimension;
a third indication field, indicating the distance sampling point index of the first codeword in the horizontal dimension;
a fourth indication field, indicating the distance sampling point index of the first codeword in the vertical dimension.

13. The method according to claim 12, wherein:
the first indication field at least comprises $\left⌈{log}_{2} {N}_{1}{O}_{1}\right⌉$ bits;
the second indication field at least comprises $\left⌈{log}_{2} {N}_{2}{O}_{2}\right⌉$ bits;
the third indication field at least comprises $\left⌈{log}_{2} {N}_{3}{O}_{3}\right⌉$ bits;
the fourth indication field at least comprises $\left⌈{log}_{2} {N}_{4}{O}_{4}\right⌉$ bits.

14. The method according to any one of claims 1-13, wherein the first codebook is used for single-polarization single-layer transmission; or,
the first codebook is used for dual-polarization multi-layer transmission.

15. The method according to claim 14, further comprising:
sending, by the terminal, second information to the network device, wherein the second information indicates the co-phase coefficient corresponding to the first codeword.

16. The method according to any one of claims 14-15, wherein the co-phase coefficient comprises at least one of:
Binary Phase Shift Keying (BPSK), Quadruple Phase Shift Keying (QPSK), and Eight-Phase Phase Shift Keying (8-PSK).

17. A communication method, comprising:
receiving, by a network device, first information sent by a terminal, wherein the first information indicates an angle parameter and a distance parameter corresponding to the first codeword, the first codeword is a codeword in the first codebook, the first codebook is constructed based on an angle parameter and a distance parameter, the first codebook is a codebook used by the terminal in a near-field region of a first antenna array, and the first antenna array is an antenna array of the network device for transmitting wireless signals to the terminal.

18. The method according to claim 17, wherein the first antenna array is any one of the following: a uniform linear array; a uniform planar array.

19. The method according to claim 17 or 18, wherein the number of antenna ports of the first antenna array in a horizontal dimension is *N*₁, and the number of antenna ports of the first antenna array in a vertical dimension is *N*₂*,* wherein *N*₁ is greater than or equal to 1, and *N*₂ is greater than or equal to 1.

20. The method according to claim 19, wherein the angle parameter comprises at least one of the following: a first angle domain parameter of the near-field region in the horizontal dimension; a second angle domain parameter of the near-field region in the vertical dimension.

21. The method according to claim 20, wherein a basis vector of the first codebook is the Kronecker product of a first basis vector in the horizontal dimension and a second basis vector in the vertical dimension;
the ${n}_{1}^{′}$-th element ${ν}_{{n}_{1}^{′}}$ of the first basis vector v is: ${ν}_{{n}_{1}^{′}} = exp \left(j\frac{2 π}{λ}\left({n}_{1}{d}_{x} cosθsinφ-\frac{{n}_{1}^{2} {d}_{x}^{2} \left(1-{cos}^{2} {θsin}^{2} φ\right)}{2 r}\right)\right) ;$
the ${n}_{2}^{′}$*-*th element ${u}_{{n}_{2}^{′}}$ of the second basis vector *u* is: ${u}_{{n}_{2}^{′}} = exp \left(j\frac{2 π}{λ}\left({n}_{2}{d}_{z} cos φ-\frac{{n}_{2}^{2} {d}_{z}^{2} {sin}^{2} φ}{2 r}\right)\right) ;$
where, *n*₁ denotes an antenna port index in the horizontal dimension, *n*₂ denotes an antenna port index in the vertical dimension, ${n}_{1}^{′} = {n}_{1} + \left({N}_{1}+1\right) / 2 , {n}_{2}^{′} = {n}_{2} + \left({N}_{2}+1\right) / 2$;
cos *θ* sin *φ* denotes a first angle domain parameter corresponding to the codeword in the first codebook, cos *φ* denotes a second angle domain parameter corresponding to the codeword in the first codebook, and *r* denotes the distance parameter corresponding to the codeword in the first codebook, -1 ≤ cos *φ* ≤ 1, -1 ≤ cos *θ* ≤ 1, the distance parameter corresponding to the codeword in the first codebook satisfies at least one of the following: $0 < r \leq \frac{2 {D}_{x}^{2} {sin}^{2} θ}{λ} , 0 < r \leq \frac{2 {D}_{x}^{2} {sin}^{2} α}{λ}$ and $0 < r \leq \frac{2 {D}_{z}^{2} {sin}^{2} φ}{λ}$, where cos *α* = -cos*θ* sin *φ* ;
j is an imaginary unit, *λ* denotes a wavelength of the wireless signal, *dₓ* denotes an antenna spacing of the first antenna array in the horizontal dimension, *Dₓ* denotes a length of the first antenna array in the horizontal dimension, *d_{z}* denotes an antenna spacing of the first antenna array in the vertical dimension, and *D_{z}* denotes a length of the first antenna array in the vertical dimension.

22. The method according to any one of claims 20-21, wherein the first information comprises at least one of the following:
first indication information, indicating a first angle domain parameter corresponding to the first codeword;
second indication information, indicating a second angle domain parameter corresponding to the first codeword;
third indication information, indicating the distance parameter corresponding to the first codeword.

23. The method according to claim 19, wherein the angle parameter comprises *N*₁*O*₁ angle sampling points obtained by quantizing a first angle domain parameter of the near-field region in the horizontal dimension, and/or *N*₂*O*₂ angle sampling points obtained by quantizing a second angle domain parameter of the near-field region in the vertical dimension;
the distance parameter comprises *N*₃*O*₃ distance sampling points obtained by quantizing a first distance domain parameter of the near-field region in the horizontal dimension, and/or *N*₄*O*₄ distance sampling points obtained by quantizing a second distance domain parameter of the near-field region in the vertical dimension;
where, *N*₃ denotes the number of sampling points for the distance parameter in the horizontal dimension, *N*₄ denotes the number of sampling points for the distance parameter in the vertical dimension, *O*₁ denotes an oversampling factor of the angle parameter in the horizontal dimension, *O*₂ denotes an oversampling factor of the angle parameter in the vertical dimension, *O*₃ denotes an oversampling factor of the distance parameter in the horizontal dimension, and *O*₄ denotes an oversampling factor of the distance parameter in the vertical dimension.

24. The method according to claim 23, wherein a basis vector of the first codebook is the Kronecker product of a first basis vector in the horizontal dimension and a second basis vector in the vertical dimension;
the ${n}_{1}^{′}$-th element ${ν}_{{n}_{1}^{′}}$ of the first basis vector v is: ${ν}_{{n}_{1}^{′}} = exp \left(j\frac{2 π}{λ}\left(\frac{2 {ln}_{1} {d}_{x}}{{N}_{1} {O}_{1}}-\frac{{n}_{1}^{2} {d}_{x}^{2} {λN}_{3}^{2} {O}_{3}^{2}}{4 {o}_{1}^{2} {D}_{x}^{2}}\right)\right) ;$
the ${n}_{2}^{′}$*-*th element ${u}_{{n}_{2}^{′}}$ of the second basis vector *u* is: ${u}_{{n}_{2}^{′}} = exp \left(j\frac{2 π}{λ}\left(\frac{2 {mn}_{2} {d}_{z}}{{N}_{2} {O}_{2}}-\frac{{n}_{2}^{2} {d}_{z}^{2} {λN}_{4}^{2} {O}_{4}^{2}}{4 {o}_{2}^{2} {D}_{z}^{2}}\right)\right) ;$
where, *n*₁ denotes an antenna port index in the horizontal dimension, *n*₂ denotes an antenna port index in the vertical dimension, ${n}_{1}^{′} = {n}_{1} + \left({N}_{1}+1\right) / 2 , {n}_{2}^{′} = {n}_{2} + \left({N}_{2}+1\right) / 2$;
*l* denotes an angle sampling point index in the horizontal dimension corresponding to the codeword in the first codebook, *m* denotes an angle sampling point index in the vertical dimension corresponding to the codeword in the first codebook, *o*₁ denotes a distance sampling point index in the horizontal dimension corresponding to the codeword in the first codebook, *o*₂ denotes a distance sampling point index in the vertical dimension corresponding to the codeword in the first codebook, *l =* 0,1*,···, N*₁*O*₁ *-* 1*, m =* 0,1*,···, N*₂*O*₂ *-* 1, *o*₁ *=* 1, 2,*···, N*₃*O*₃*, o*₂ *=* 1, 2*,···, N*₄*O*₄;
*j* is an imaginary unit, *λ* denotes a wavelength of the wireless signal, *dₓ* denotes an antenna spacing of the first antenna array in the horizontal dimension, *Dₓ* denotes a length of the first antenna array in the horizontal dimension, *d_{z}* denotes an antenna spacing of the first antenna array in the vertical dimension, and *D_{z}* denotes a length of the first antenna array in the vertical dimension.

25. The method according to claim 24, wherein the antenna port index of the first antenna array satisfies the following condition: ${n}_{1} ∈ \left\{-\left({N}_{1}-1\right)/2,⋯,0,⋯\left({N}_{1}-1\right)/2\right\} ; {n}_{2} ∈ \left\{-\left({N}_{2}-1\right)/2,⋯,0,⋯\left({N}_{2}-1\right)/2\right\} .$

26. The method according to claim 25, wherein an initial phase of the basis vector in the first codebook is zero;
the ${n}_{1}^{′}$-th element ${ν}_{{n}_{1}^{′}}$ of the first basis vector v is: ${ν}_{{n}_{1}^{′}} = exp \left(j\frac{2 π}{λ}\left(\frac{2 {ln}_{1}^{′} {d}_{x}}{{N}_{1} {O}_{1}}-\frac{\left({\left({n}_{1}^{′}\right)}^{2}-{n}_{1}^{′}\left({N}_{1}+1\right)\right) {d}_{x}^{2} {λN}_{3}^{2} {O}_{3}^{2}}{4 {o}_{1}^{2} {D}_{x}^{2}}\right)\right) ;$
the ${n}_{2}^{′}$*-*th element ${u}_{{n}_{2}^{′}}$ of the second basis vector *u* is: ${u}_{{n}_{2}^{′}} = exp \left(j\frac{2 π}{λ}\left(\frac{2 {mn}_{2}^{′} {d}_{z}}{{N}_{2} {O}_{2}}-\frac{\left({\left({n}_{2}^{′}\right)}^{2}-{n}_{2}^{′}\left({N}_{2}+1\right)\right) {d}_{z}^{2} {λN}_{4}^{2} {O}_{4}^{2}}{4 {o}_{2}^{2} {D}_{z}^{2}}\right)\right) .$

27. The method according to claim 26, wherein the antenna spacing in both the horizontal and vertical dimensions of the first antenna array is $\frac{λ}{2} , {D}_{x} = {N}_{1} \frac{λ}{2}$, and ${D}_{y} = {N}_{1} \frac{λ}{2}$;
the ${n}_{1}^{′}$-th element ${ν}_{{n}_{1}^{′}}$ of the first basis vector v is: ${ν}_{{n}_{1}^{′}} = exp \left(\frac{j 2 {πln}_{1}^{′}}{{N}_{1} {O}_{1}}-\frac{jπ \left({\left({n}_{1}^{′}\right)}^{2}-{n}_{1}^{′}\left({N}_{1}+1\right)\right) {N}_{3}^{2} {O}_{3}^{2}}{2 {o}_{1}^{2} {N}_{1}^{2}}\right) ;$
the ${n}_{2}^{′}$*-*th element ${u}_{{n}_{2}^{′}}$ of the second basis vector *u* is: ${u}_{{n}_{2}^{′}} = exp \left(\frac{j 2 {πmn}_{2}^{′}}{{N}_{2} {O}_{2}}-\frac{jπ \left({\left({n}_{2}^{′}\right)}^{2}-{n}_{2}^{′}\left({N}_{2}+1\right)\right) {N}_{4}^{2} {O}_{4}^{2}}{2 {o}_{2}^{2} {N}_{2}^{2}}\right) .$

28. The method according to any one of claims 24-27, wherein the first information comprises at least one of the following:
a first indication field, indicating the angle sampling point index of the first codeword in the horizontal dimension;
a second indication field, indicating the angle sampling point index of the first codeword in the vertical dimension;
a third indication field, indicating the distance sampling point index of the first codeword in the horizontal dimension;
a fourth indication field, indicating the distance sampling point index of the first codeword in the vertical dimension.

29. The method according to claim 28, wherein:
the first indication field at least comprises $\left⌈{log}_{2} {N}_{1}{O}_{1}\right⌉$ bits;
the second indication field at least comprises $\left⌈{log}_{2} {N}_{2}{O}_{2}\right⌉$ bits;
the third indication field at least comprises $\left⌈{log}_{2} {N}_{3}{O}_{3}\right⌉$ bits;
the fourth indication field at least comprises $\left⌈{log}_{2} {N}_{4}{O}_{4}\right⌉$ bits.

30. The method according to any one of claims 17-29, wherein the first codebook is used for single-polarization single-layer transmission; or,
the first codebook is used for dual-polarization multi-layer transmission, wherein the first codebook is constructed based on the angle parameter, the distance parameter, and a co-phase coefficient.

31. The method according to claim 30, further comprising:
sending, by the terminal, second information to the network device, wherein the second information indicates the co-phase coefficient corresponding to the first codeword.

32. The method according to any one of claims 30-31, wherein the co-phase coefficient comprises at least one of:
Binary Phase Shift Keying (BPSK), Quadruple Phase Shift Keying (QPSK), and Eight-Phase Phase Shift Keying (8-PSK).

33. A terminal, comprising:
a processing module, configured to determine a first codeword in a first codebook, wherein the first codebook is constructed based on an angle parameter and a distance parameter, the first codebook is a codebook used by the terminal in a near-field region of a first antenna array, the first antenna array is an antenna array of the network device for transmitting wireless signals to the terminal;
a transceiver module, configured to send first information to the network device, wherein the first information indicates the angle parameter and the distance parameter corresponding to the first codeword.

34. A network device, comprising:
a transceiver module, configured to receive first information sent by a terminal, wherein the first information indicates an angle parameter and a distance parameter corresponding to the first codeword, the first codeword is a codeword in the first codebook, the first codebook is constructed based on an angle parameter and a distance parameter, the first codebook is a codebook used by the terminal in a near-field region of a first antenna array, the first antenna array is an antenna array of the network device for transmitting wireless signals to the terminal.

35. A terminal, comprising:
one or more processors;
a memory coupled to the one or more processors, wherein the memory comprises executable instructions, which, when executed by the one or more processors, cause the terminal to perform the communication method according to any one of claims 1-16.

36. A network device, comprising:
one or more processors;
a memory coupled to the one or more processors, wherein the memory comprises executable instructions, which, when executed by the one or more processors, cause the network device to perform the communication method according to any one of claims 16-32.

37. A communication system, comprising a terminal and a network device, wherein the terminal is configured to implement the communication method according to any one of claims 1-16, and the network device is configured to implement the communication method according to any one of claims 16-32.

38. A storage medium, having instructions stored thereon, the instructions cause the communication device to perform the communication method according to any one of claims 1-16 or 16-32 when executed on a communication device.
